# EUROPÄISCHE PATENTSCHRIFT

(11) **EP 1 933 587 B1**
(45) Veröffentlichungstag und Bekanntmachung des Hinweises auf die Patenterteilung: **22.08.2012**
(21) Anmeldenummer: 06025992.6
(22) Anmeldetag: 15.12.2006
(51) Int. Cl.: H04B 10/24, H04M 11/06

(54) **Telekommunikationsübertragungsverfahren und -einrichtung mit Mehrträgermodulation**
Method and device for telecommunications transmission with multicarrier modulation
Procédé et dispositif de transmission de télécommunication avec modulation de multi-porteuses

(43) Veröffentlichungstag der Anmeldung: 18.06.2008
(73) Patentinhaber: Teleconnect GmbH, 01157 Dresden (DE)
(72) Erfinder: Bluschke, Andreas, Dr., 01217 Dresden (DE); Hansske, Michael, 01187 Dresden (DE); Matthews, Michael, 01157 Dresden (DE); Nürnberger, Gerald, Dr., 01309 Dresden (DE); Rietzsch, Philipp, 01157 Dresden (DE); Schulz, Jörg, 01309 Dresden (DE)
(74) Vertreter: Caspary, Karsten

(56) Entgegenhaltungen:
- EP-A1- 1 120 943
- EP-A1- 1 176 837
- EP-A2- 0 917 392
- WO-A-2005/029907
- GB-A- 2 383 919
- US-B1- 6 886 181
- YASUE T ET AL: "VDSL access system based on rate-adaptive optical sub-carrier multiplexing", CONSUMER COMMUNICATIONS AND NETWORKING CONFERENCE, 2004. CCNC 2004. FI RST IEEE LAS VEGAS, NV, USA 5-8 JAN. 2004, PISCATAWAY, NJ, USA,IEEE, 5 January 2004 (2004-01-05), pages 262-267, XP010696835, ISBN: 978-0-7803-8145-2
- ERIKSSON P.-E.; ODENHAMMAR B.: "VDSL2: NEXT IMPORTANT BROADBAND TECHNOLOGY", ERICSSON REVIEW, January 2006 (2006-01), pages 35-47, XP001501615, SWEDEN
- THAKUR M P ET AL: "VDSL over fibre access network with reflective optical network unit", TRANSPARENT OPTICAL NETWORKS, 2005, PROCEEDINGS OF 2005 7TH INTERNATIO NAL CONFERENCE BARCELONA, CATLONIA, SPAIN JULY 3-7, 2005, PISCATAWAY, NJ, USA,IEEE, vol. 2, 3 July 2005 (2005-07-03), pages 413-416, XP010834512, ISBN: 978-0-7803-9236-6
- NN: "Customer Premises Equipment (CPE) IC Portfolio", Infineon , 1 May 2006 (2006-05-01), Retrieved from the Internet: URL:ftp://ftp.efo.ru/pub/infineon/CPE_sele ctionguide_final.pdf [retrieved on 2010-02-26]
- Lücke, B.: "Fast Ethernet POF Components with Bare-Fiber Adapter for IPTV and Home Networking", Infineon Hone Networking Solutions May 2006 , 12 May 2006 (2006-05-12), Retrieved from the Internet: URL:http://www.pofac.de/downloads/itgfg/fg t21/FGT21_Oldenburg_Luecke_POF-Ethernet.pd f [retrieved on 2010-02-26]

## Beschreibung

### GEBIET DER ERFINDUNG

Die vorliegende Erfindung betrifft ein mehrträgerbasiertes Telekommunikationsübertragungsverfahren und eine entsprechende Einrichtung für den Einsatz im Teilnehmerzugangsnetz der Telekommunikationsinfrastruktur. Dabei kommt eine Signalübertragung mittels Lichtwellenleiter, insbesondere optische Polymerfasern (POF), an Stelle von Kupferdoppeladern (Cu-DA) zum Einsatz.

### STAND DER TECHNIK

Nach dem Stand der Technik sind die heute vorhandenen Teilnehmerzugangsnetze bezüglich der erreichbaren Datenübertragungsrate dadurch gekennzeichnet, dass sie an verschiedenen Stellen einen Engpass aufweisen. Das Internet und neue Dienstangebote (Triple-Play mit IPTV, d. h. Fernsehen über Internet) verlangen immer höhere Datenübertragungsraten zum Teilnehmer in Abwärtsrichtung (auch Downstream oder kurz DS genannt), denen das Hauptnetz oder Backbone durch Einsatz von Hochgeschwindigkeitsglasfasersystemen gerecht werden kann. Der unmittelbare Teilnehmerzugang selbst, die so genannte letzte Meile, basiert jedoch nach wie vor überwiegend auf der Weiterverwendung von Cu-DA. Deren Leistungsfähigkeit ist aufgrund der elektrischen Eigenschaften bzw. physikalischen Wirkprinzipien beschränkt. Auch moderne Übertragungsverfahren wie ADSL/ADSL2/ADSL2+ und VDSL1/VDSL2 stoßen an die Grenzen dieses Übertragungsmediums, die zum Teil gegenwärtig für die geforderten Anwendungen nicht mehr akzeptabel sind.

Somit gilt die letzte Meile als der ausgewiesene Flaschenhals in heutigen Telekommunikationsnetzen. Mit der Öffnung oder Aufweitung dieses Flaschenhalses steht oder fällt die Möglichkeit zu neuen Dienstangeboten und deren potentieller wirtschaftlicher Erfolg. In jüngster Zeit spielen tatsächlich immer mehr auch die buchstäblich letzten Meter, beispielsweise die Zuleitung vom Breitband-Hausanschluss zu den Settop-Boxen für hochauflösendes digitales Fernsehen eine beschränkende Rolle.

Im Verlauf der Entwicklung der leitungsgebundenen Infrastruktur für das Teilnehmerzugangsnetz wurden verschiedene Ansätze für dessen Realisierung vorgeschlagen und teilweise auch in die Praxis umgesetzt.

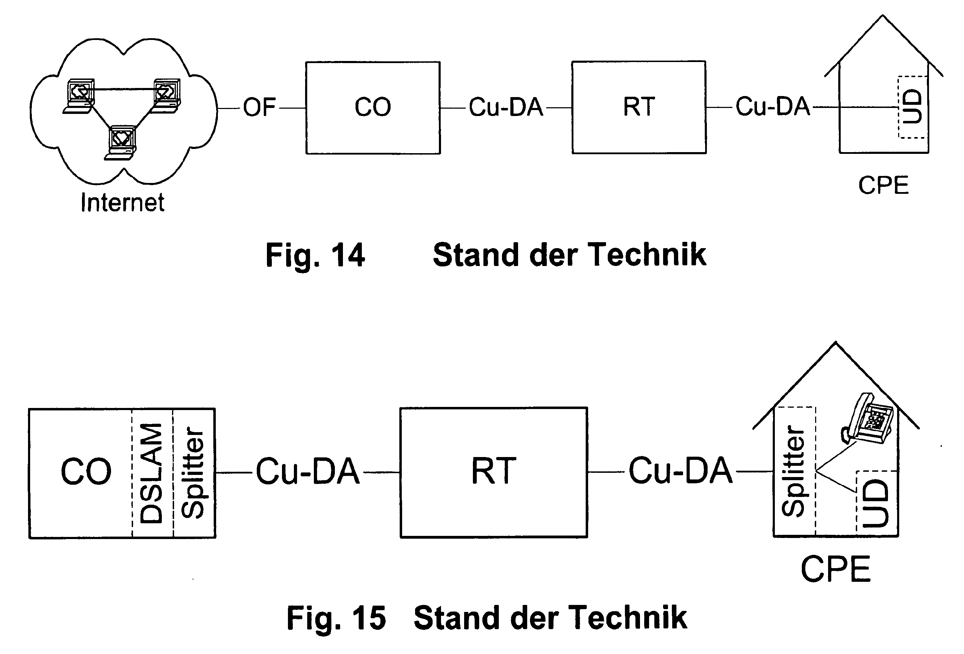

Fig. 14 zeigt eine Übersicht der Bestandteile eines herkömmlichen Teilnehmerzugangsnetzes. Das mit einer Wolke dargestellte Hauptnetz, das Internet, auch Backbone genannt, besteht aus sehr breitbandigen, hauptsächlich optischen Übertragungskanälen, die bei Netzknoten in geeigneter Weise zusammengeschaltet sind. Mit dem Internet durch ein optisches Übertragungsmedium OF, meist Glasfaser, ist die Vermittlungsstelle, auch CO (Central Office) genannt, verbunden. Das optische Übertragungsmedium OF ist mit einem optischen Leitungsabschluss (Optical Line Termination; OLT) im CO verbunden. Die Übertragungsstrecke setzt sich fort vom CO zum Kabelverzweiger, in Fig. 14 mit RT (Remote Terminal) bezeichnet. Die Verbindung zwischen CO und RT besteht aus Cu-DA. Die Einrichtungen des Telekommunikationsteilnehmers, mit CPE (Customer Premises Equipment) bezeichnet, sind über eine Cu-DA mit dem RT verbunden. Die Cu-DA ist normalerweise bis zu einem zentralen Hausanschluss verlegt, der sich anschließend bis zu den Telefondosen in den einzelnen Wohnungen und/oder Räumen z. B. in einer Sternverkabelung verzweigt. Wie aus Fig. 14 ersichtlich, besteht der gesamte Übertragungsabschnitt zwischen den Lokationen CO und CPE aus Cu-DA.

Unter Nutzung der gleichen Cu-DA-basierenden Infrastruktur wurden in den vergangenen Jahren xDSL-basierende Dienstangebote etabliert. Dabei kamen verschiedene Technologien zum Einsatz, von ISDN BRA, über HDSL, MSDSL und SHDSL bis hin zu VDSL1, ADSL und ADSL2/ADSL2+.

Die erwähnten Technologien unterscheiden sich u. a. in den übertragbaren Bitraten in Abwärts- (Downstream - DS) und Aufwärtsrichtung (Upstream - US) und in den eingesetzten Codierverfahren und Modulationsarten. Es gilt als unbestritten, dass sich momentan Mehrträgerverfahren (z. B. Discrete Multitone Transmission) als die am besten geeigneten Verfahren für die Übertragung über Cu-DA durchgesetzt haben. Mehrträgerverfahren haben sich daher auch bei VDSL2 etabliert und sind in der aktuellen Norm, der ITU-T G.993.2 vom Februar 2006 festgeschrieben. Bei den weiteren Ausführungen zum Stand der Technik erfolgt deshalb eine Beschränkung der Darstellung auf Mehrträgerverfahren.

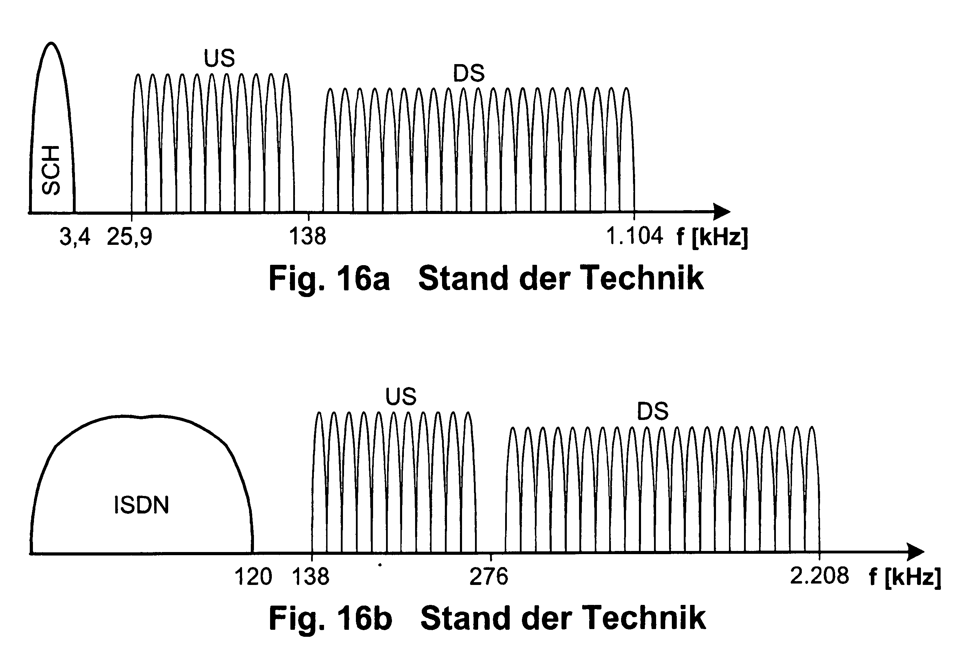

Für einen ADSL/ADSL2/ADSL2+-Anschluss lässt sich der gesamte Abschnitt zwischen CO und CPE bzw. Endgerät wie in Fig. 15 gezeigt darstellen. Auf dem gesamten Abschnitt zwischen CO und den Endgeräten UD wird die Cu-DA eingesetzt. Auf der Cu-DA zwischen beiden Splittern ergibt sich die folgende in den Fig. 16a und 16b gezeigte beispielhafte Frequenzaufteilung. Die mit ADSL, ADSL2 und ADSL2+ erzielbaren DS-Bitraten betragen etwa 8, 12 und 24 Mbit/s.

Um dem wachsenden Bedarf nach noch höheren DS-Bitraten (z. B. für IPTV) auf dem Abschnitt zwischen CO und Endgerät UD gerecht werden zu können, müssen im Teilnehmerzugangsnetz strukturelle Änderungen vorgenommen werden, um neu gebildete "Flaschenhälse" zu eliminieren bzw. von vornherein zu vermeiden. Im Zusammenhang mit dem Aufbau von VDSL2-Netzen ist man deshalb dazu übergegangen, auf dem Abschnitt zwischen CO und RT zusätzlich Lichtwellenleiter, z. B. Glasfasern, zu verlegen und die bis dahin rein passiven RT mit aktiver Technik aufzurüsten. Die bisher bei ADSL/ADSL2/ADSL2+ im CO untergebrachten DSLAMs und Splitter werden nun im RT installiert. Da der im RT verfügbare Platz jedoch sehr eingeschränkt ist, werden die bisher eingesetzten RT mit sogenannten Multifunktionsgehäusen überbaut, wie derzeit vor allem in Großstädten häufig zu beobachten ist. Diese Multifunktionsgehäuse bieten ebenfalls Platz für die erforderliche Stromversorgung und Cross-Connect-Geräte. Eine derartige Netzstruktur wird auch Fiber-To-The-Curb (FTTC) genannt.

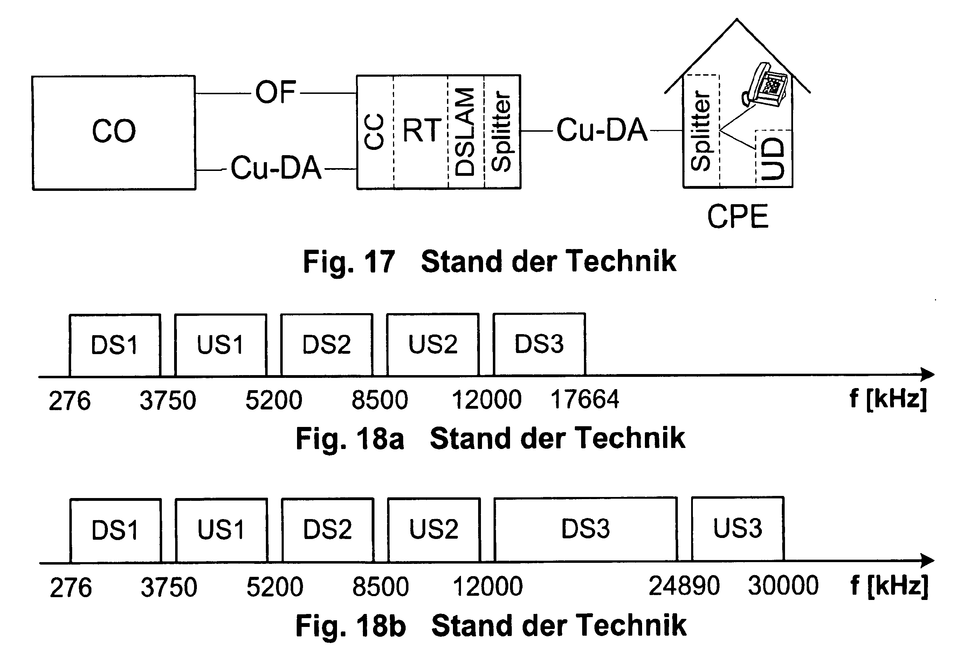

In Fig. 17 ist eine herkömmliche xDSL-Struktur gezeigt. Auf dem Abschnitt zwischen CO und Endgeräten wird nun nicht mehr durchgängig die Cu-DA eingesetzt, sie bleibt jedoch im Abschnitt zwischen RT und CPE als Übertragungsmedium erhalten und wird weiterhin genutzt. Auf dieser Cu-DA zwischen Splitter (im RT) und Splitter (als Teil des CPE) ergeben sich für xDSL die in den Fig. 18a und 18b gezeigten beispielhaften Frequenzaufteilungen bei VDSL2. Derartige Aufteilungsmuster nennt man auch Bandplan. In Fig. 18b reicht der Bandplan beispielsweise von 276 kHz bis 30 MHz, wobei der Bereich in jeweils drei DS- und US-Abschnitte unterteilt ist. Wenn Teilnehmer mittels VDSL2 direkt am CO angeschlossen werden - im sogenannten Nahbereich -, dann werden meist nur Bandpläne von bis zu 8 MHz eingesetzt.

Die mit VDSL2 erzielbaren DS-Bitraten betragen mehr als 100 Mbit/s. Die Gesamtübertragungsrate (Aggregate Transfer Rate), d. h. US und DS kombiniert, beträgt über 200 Mbit/s. Diese Werte hängen in starkem Maße von den verwendeten Bandplänen und Profilen ab.

Hier muss ergänzend darauf hingewiesen werden, dass die bisher gemachten Angaben zu den Bitraten einerseits stark von den verwendeten Cu-DA und andererseits von den jeweiligen Kabelbeschaltungen abhängen. Da sich die Cu-DA im Normalfall in einem Bündel aus mehreren Cu-DA befindet, kommt es zur gegenseitigen Beeinflussung (Nahübersprechen - NEXT - und Fernübersprechen - FEXT) der Signale in den Cu-DA, die davon abhängt, mit welchen Systemen die einzelnen Cu-DA beschaltet sind.

Untersuchungen im Zusammenhang mit VDSL2 haben gezeigt, dass es ohne spezielle Maßnahmen im Verzweigungskabelnetz, d. h. zwischen RT/Kabelverzweiger (KVz) und CPE nur schwer möglich ist, die gegenseitige Beeinflussung zu unterbinden. Als solche können bekannte Verfahren wie z. B. PSD-Shaping, UPBO oder DPBO genannt werden. Ohne ein aufwändiges spektrales Management werden sich zukünftig die Probleme der gegenseitigen Beeinflussung der Leitungen nur schwer beherrschen lassen. Als sehr kritisch hat sich, besonders bei VDSL2, auch der Einfluss von Stichleitungen (bridged taps) aufgrund von ungewünschten Reflexionen herausgestellt. Außerdem ist der Einfluss von Impulsstörern erheblich.

Ausgehend von den genannten Fakten ist absehbar, dass auch bei VDSL2 der verbleibende Cu-DA-Abschnitt im Verzweigungskabelnetz den Flaschenhals darstellt.

Eine Möglichkeit, diesen Engpass für die Datenübertragung zu vermeiden, ist der Einsatz von Glasfasern auch im Verzweigungskabelnetz. Da dies aber mit hohen Verlege- und Installationskosten verbunden ist, bleibt er nur sogenannten MxU-Anwendungen (MCU - Multi-Commercial Units: Bürohäuser und Universitätseinrichtungen; MTU/MDU - Multi-Tenant/Dwelling Units: Hochhäuser und Mehrfamilienhäuser; MHU - Multi Hospitality Units: Hotels und Freizeiteinrichtungen; MPU - Multi-Public Units: Flughäfen, Messegelände und Bahnhöfe) vorbehalten. Ein derartiger Ansatz ist bei Gaudino, R. "The use of large-core POF for distance above 100 meters: technical challanges and potential applications as investigated in the EU POF-ALL project", 15th International Conference on Plastic Optical Fiber, 11. bis 14. September 2006, Seoul, Korea, S. 342-347, beschrieben.

Mit der gleichen Zielstellung wird in Cardenas D., Gaudino R., Nespola A., Abrate S. "10 Mb/s Ethernet transmission over 425 m of large core step index POF: a media converter prototype", 15th International Conference on Plastic Optical Fiber, 11. bis 14. September 2006, Seoul, Korea, S. 46-50, der Einsatz von POFs im Verzweigungskabelnetz in Erwägung gezogen und ein entsprechender Medienkonverter vorgestellt. Dieser Medienkonverter beinhaltet u. a. eine 8B10B-Codierung und eine auf Reed-Solomon basierende Vorwärtsfehlerkorrektur (Forward Error Correction; FEC). Das dabei verwendete proprietäre Übertragungsprotokoll soll in der noch nicht veröffentlichten europäischen Patentanmeldung 05 020 517.8, angemeldet am 20. September 2005, beschrieben worden sein. Hauptaugenmerk wird dabei der Reduzierung der genutzten Bandbreite gewidmet, um die POF besser auszunutzen.

Ein anderes Modulationsverfahren für POF ohne jegliche Bezugnahme zum Verzweigungskabelnetz wurde in dem Artikel von Gaudino R., Capello E., Perrone G., Abrate S., Chiaberge M., Francia P., Botto G. "Advanced modulation formats over POF: is there a rationale for multilevel optical transmission", http://ocgserver.polito.it:82/Papers/POFConference %202004%20multilevel%20Slideshow.pdf untersucht. Basierend auf diesen Untersuchungen wurden von Rizzetti M., Bettoni G., Nocivelli A. "100 Mbps Ethernet transmission over 100m of SI-PMMA Plastic optical fiber", 15th International Conference on Plastic Optical Fiber, 11. bis 14. September 2006, Seoul, Korea, S. 57-63, die Erkenntnisse untermauert und es wurde festgestellt, dass die Mehrpegelmodulation für die POF-Übertragung als bester Kompromiss zwischen Systemkosten und Komplexität geeignet ist.

In den beiden Artikeln Nespola A., Cardenas D., Gaudino R., Abrate S. "Analysis of digital pre-emphasis on 200+ meter SI-POF links at 100 Mbit/s inside the POF-ALL project", 15th International Conference on Plastic Optical Fiber, 11. bis 14. September 2006, Seoul, Korea, S. 354-358, und Nespola A., Cardenas D., Gaudino R., Abrate S. "Analysis of adaptive post-equalization techniques on 200+ meter SI-POF links at 100 Mbit/s inside the POF-ALL project", 15th International Conference on Plastic Optical Fiber, 11. bis 14. September 2006, Seoul, Korea, S. 403-407 wurden die Untersuchungen zu einer 8-PAM (8-Pegel-Pulsamplitudenmodulation) fortgesetzt.

Entscheidender Nachteil dieser vorgeschlagenen Lösungen ist, dass keine Orientierung an bereits vorhandenen Schaltkreislösungen erfolgt und somit die Eignung für eine Anwendung im Massenmarkt in Frage zu stellen ist. Es ist zu erwarten, dass die vorgeschlagenen Realisierungswege, also erst die FPGA-Entwicklung und anschließend die Umsetzung als ASIC, sowohl sehr kostenintensiv als auch zeitaufwändig sein werden.

Mit einer Lösung, bei der die Glasfaser direkt bis zum Gebäude verlegt wird, auch FTTB (Fiber-To-The-Building) genannt, kann man das Problem im Verzweigungskabelnetz umgehen. Dabei ist jedoch zu beachten, dass zumeist die im Gebäude bereits verlegten Cu-DA weiter benutzt werden sollen und dort die gleichen Probleme wie im Verzweigungskabelnetz bei FTTC-Lösungen verschärft auftreten, d. h. das Nebensprechen (NEXT, FEXT) wird zum begrenzenden Faktor.

Schlussfolgernd aus dem Voranstehenden ist es für beide Netzausbauszenarien notwendig, nach alternativen Lösungsansätzen zu suchen. Ein Ansatz wird in der vorliegenden Beschreibung erläutert.

Bisher wurde ausschließlich der Abschnitt bis zum Teilnehmer bzw. CPE betrachtet. Wenn es nun dem Netzbetreiber gelingt, die hohen Bitraten mittels ADSL2+, VDSL2 oder xPON bis dorthin zu transportieren, dann steht der Teilnehmer, also der Endkunde, vor dem Problem der Verteilung der Daten in seinem Heimnetzwerk.

Eine dazu erst kürzlich vorgeschlagene Lösung beruht auf der Verwendung von zwei POF für eine Fast-Ethernet-Verlängerung. Dabei wird das 100 Mbit/s Fast-Ethernet-Signal in einem Hardware-Konverter einer 4B5B-Codierung unterzögen und duplex über zwei POFs übertragen. Bedingt durch die Codierung beträgt die Baudrate 125 Mbaud. Der Artikel von Lücke B. "Fast Ethernet POF Components with Bare-Fiber Adapter for IPTV and Home Networking", http://www.pofac.de/downloads/itgfg/fgt21/FGT21_Oldenburg_Luecke_POF-Ethernet.pdf, beschreibt diese Lösung. Siehe dazu auch "Messe mit POF" http://www.tomsnetworking.de/content/reports/j2006a/report_systems_2006/index.html. Nachteil dieser Lösung ist, dass sie nur für Duplex-POF geeignet ist, und eine relativ hohe Bandbreite der POF erforderlich ist.

US-6,886,181-B1 beschreibt eine Vorrichtung zur erweiterten Verteilung von xDSL-Signalen. Dabei werden zwischen der Vermittlungsstelle (Central Office, CO) und dem Kabelverzweiger (Cabinet oder Remote Terminal, RT) optische Übertragungsmedien genutzt, auf der Kommunikationsstrecke zwischen Kabelverzweiger und Teilnehmer (Customer Premises, CPE) eine doppeladrige Kupferleitung. Ziel ist es, die Reichweite der xDSL-Signale zu erhöhen, wobei dieses Ziel durch eine bidirektionale optische Verbindung zwischen Vermittlungsstelle CO und Kabelverzweiger (Cabinet) erreicht wird, über die die xDSL-Signale mehrerer Teilnehmer in FDM-Technik übertragen werden.

WO-2005/029907-A1 offenbart ein Kommunikationsnetzwerk, bei dem zwischen Vermittlungsstelle (Central Office, CO) und dem Kabelverzweiger (Cabinet oder Remote Terminal, RT) optische Übertragungsmedien genutzt werden, um xDSL-Signale zu übertragen. Dabei wird die xDSL-Modulation nicht im Kabelverzweiger, sondern schon in der Vermittlungsstelle durchgeführt, um die Stromversorgungsbedürfnisse im Kabelverzweiger zu vermindern.

Eriksson et al. offenbaren in dem Artikel "VDSL2: Next Important Broundbund Technology" Ericsson review Januar 2006, Seiten 35-47, eine Mehrträgeübertragung-nach dem "Zipper" Prinzip.

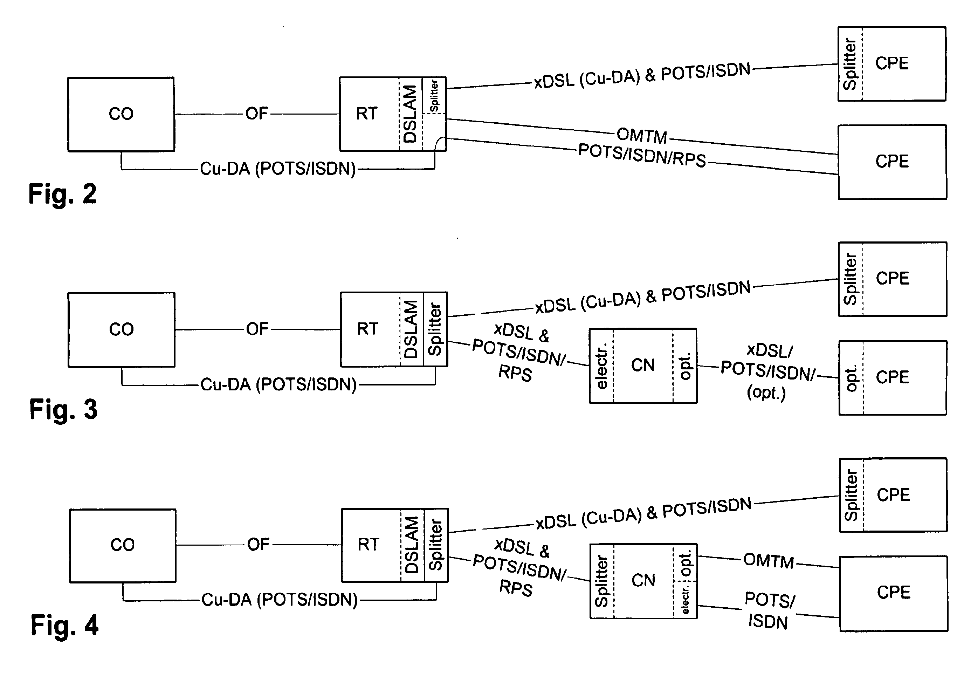

Thakur et al. offenbaren in "VDSL over fibre access network with reflectrive optical network unit" erschienen am 3. July 2005 Transparent Optical Networks 7th International Conference, eine Mehrträgerübertragung mit einen elektrischen und einem optischen Teil. Figur 2 dieser Veröftentlichung zeigt Frequenz zwischebenräume bei der optischen Übertragung.

Die herkömmlichen Lösungen der oben geschilderten Problemstellungen weisen somit die folgenden Nachteile auf:
- Die Nachverlegung von Glasfaser als breitbandiges Übertragungsmedium bis in jedes Haus und noch weiter ist durch die hohen Faser-, Installations- und Verlegekosten teuer.
- Lösungen, die auf die Neuentwicklung von Schaltkreisen zur Realisierung komplexer Signalkodierungen abzielen (Ziel ist letztendlich die Übertragung von möglichst vielen Bits pro Hz Bandbreite des Übertragungsmediums), erfordern hohe Entwicklungskosten und werden nicht zeitnah verfügbar sein.
- Bisher verfügbare Medienkonverter, die auf eine Nutzung von POF abzielen, schöpfen die Möglichkeiten moderner Codierverfahren bei weitem nicht aus und verschwenden somit die begrenzte Bandbreite der POF.

### ZUSAMMENFASSUNG DER ERFINDUNG

Es ist deshalb die Aufgabe der vorliegenden Erfindung, die oben beschriebenen Nachteile zu überwinden und ein Telekommunikationsübertragungsverfahren sowie eine zugehörige Einrichtung bereitzustellen, das bzw. die den vorstehend beschriebenen Flaschenhals für die Übertragung hoher Datenraten auf dem Weg zum Teilnehmer erweitert bzw. vermeidet und eine Alternative zur bestehenden Cu-DA-Infrastruktur darstellt, flexibel einzusetzen, auf der Basis vorhandener elektronischer Komponenten preiswert und zeitnah zu realisieren ist sowie die Vorteile der optischen Übertragungstechnik hinsichtlich Nebensprechen auf Leitungen und elektromagnetischer Verträglichkeit nutzt.

Diese Aufgabe wird durch den Gegenstand der Ansprüche 1 und 7 gelöst.

Diese Aufgabe wird gelöst durch das Verfahren gemäß Anspruch 1.

Das erfindungsgemäße Telekommunikationsübertragungsverfahren verwendet das zugrunde liegende Verfahren der Mehrträgermodulation, bisher angewendet für xDSL-Systeme über Cu-DA, welches bereits erprobt und zuverlässig ist sowie eine hohe Bandbreitenausnutzung des Übertragungsmediums gewährleistet. Dies hat den Vorteil, dass auf einfache Weise große Teile von existierenden und ausgereiften elektronischen Schaltkreislösungen verwendet werden können, welche auf dem Markt zu wirtschaftlichen Konditionen verfügbar sind. Das erfindungsgemäße Telekommunikationsübertragungsverfahren verwendet demnach prinzipiell ein Verfahren, welches auf xDSL-Prinzipien basiert und zwar über ein optisches Übertragungsmedium. Die Kombination dieser Mehrträgermodulation mit der optischen Übertragung vorzugsweise über POF gewährleistet auch für dieses Übertragungsmedium eine optimale Bandbreitenausnutzung.

Darüber hinaus können Übertragungskanäle verwendet werden, die bei den bisherigen VDSL2-Verfahren unbelegt waren, um die Trägerfrequenzgruppen der einzelnen Richtungen ausreichend voneinander zu trennen.

Das erfindungsgemäße Verfahren schafft im Teilnehmerzugangsnetz die Möglichkeit, den steigenden Anforderungen hinsichtlich der zu übertragenden Bitraten zu entsprechen und ist somit eine wirksame Lösung, den oben beschriebenen Flaschenhals deutlich zu weiten bzw. ganz zu beseitigen.

Bevorzugt ist das optische Übertragungsmedium als POF ausgebildet. POF bieten eine sehr gute mechanische Flexibilität, eine geringes Gewicht, sind unzerbrechlich, für Steckverbindungen leicht handhabbar, unempfindlich gegen elektromagnetische Einflüsse und kostengünstig. Darüber hinaus sind hohe Datenübertragungsraten möglich.

Mit besonderem Vorteil sind die POF als Stufenindex-POF (SI-POF) ausgebildet. SI-POF ist besonders preisgünstig und weist für das hier verwendete Übertragungsverfahren eine ausreichende Bandbreite bei akzeptabler Länge auf.

Vorteilhafterweise weist bei dem erfindungsgemäßen Telekommunikationsübertragungsverfahren die erste Lokation einen optischen Leitungsabschluss (OLT) auf, und die zweite Lokation ist eine optische Netzwerkeinheit (ONU). Dabei ist die Übertragungsstrecke zwischen beiden Lokationen aus POF ausgebildet.

Mit weiterem Vorteil weist die erste Lokation eine optische Netzwerkeinheit (ONU) auf, und die zweite Lokation ist ein optischer Netzwerkabschluss (ONT), wobei die Übertragungsstrecke zwischen beiden Lokationen aus POF ausgebildet ist. Der Flaschenhals zwischen dem RT und dem Hausanschluss kann damit wirkungsvoll beseitigt bzw. aufgeweitet werden. Dazu sind zwar parallel zur vorhandenen Cu-DA-Infrastruktur POFs zu verlegen, jedoch sind diese im Vergleich zu Glasfasern deutlich preiswerter. Außerdem ist die Installation der POF sehr einfach. Wenn durch den Netzbetreiber "VoIP for First Line" angeboten wird, dann kann der Teilnehmer auch nur über die POF mit dem Teilnehmerzugangsnetz verbunden sein. Durch Auswahl der Anzahl der Übertragungskanäle kann man sich der Bandbreite der POF optimal anpassen. In einer für die SI-POF üblichen Bandbreite können damit mehr Mbit/s als bei anderen Verfahren übertragen werden.

Bevorzugt weist die erste Lokation einen optischen Netzwerkabschluss (ONT) auf, und die zweite Lokation ist ein Endgerät innerhalb eines Hausnetzes, und die Übertragungsstrecke zwischen beiden Lokationen ist aus POF ausgebildet. Diese Konstellation deckt den Fall ab, bei dem beispielsweise der DSLAM im Keller eines Hauses angeordnet ist und mehrere Endgeräte auf einfache Weise mittels POF angebunden werden.

Selbstverständlich kann die bisherige Cu-DA, deren Bandbreite den Flaschenhals darstellt, neben den optischen Übertragungsstrecken parallel erhalten bleiben. Dies ist sogar sinnvoll, wenn über die Cu-DA weiterhin die üblichen notruffähigen Telefondienste über POTS/ISDN BRA verwendet werden. Dadurch entfällt die Notwendigkeit von Splittern, die bisher die Frequenzbereiche voneinander trennten. Außerdem könnte über die Cu-DA eine Fernspeisung der Einrichtungen in der Kabelmuffe realisiert werden.

Die erfindungsgemäße Telekommunikationssende- und -empfangseinrichtung zur Ausführung eines Verfahrens weist die Merkmale des unabhängigen Anspruchs 7 auf. Die erfindungsgemäße Telekommunikationssende- und -empfangs-einrichtung lässt sich auch als OMTM-Transceiver bezeichnen, wobei an den OMTM-Transceiver unmittelbar das optische Übertragungsmedium angeschlossen ist.

Ein Vorteil der erfindungsgemäßen Telekommunikationssende- und -empfangseinrichtung ist sofortige und wirtschaftliche Verfügbarkeit komplexer Halbleiterschaltungen (ICs) zur Signalcodierung, da der erfindungsgemäße OMTM-Transceiver unmittelbar mit bestehenden elektronischen Halbleiterschaltungen und Bauteilen bestückt werden kann. Beispielsweise ist die Realisierung auf der Linecard eines DSLAMs nicht allzu kompliziert, denn es sind lediglich einige Komponenten zu tauschen, z. B. das elektrische Transceiver-Modul durch ein optisches Transceiver-Modul. Weiterhin werden durch die Bereitstellung der erfindungsgemäßen Einrichtung die heutigen und zukünftigen Anforderungen hinsichtlich einer entsprechenden Übertragungskapazität erfüllt. Ein weiterer Vorteil ist die hohe Funktionssicherheit der Übertragungswege, da die optische Übertragungstechnik über Lichtwellenleiter keine mit der Cu-DA vergleichbaren Über- und Nebensprechprobleme kennt und keinerlei negative EMV-Beeinflussung stattfinden kann.

Für eine einfache Handhabung des erfindungsgemäßen OMTM-Transceivers kann er teilweise steckbar ausgeführt werden, d. h. die jeweiligen elektrischen bzw. optischen Transceiver-Module können aufgesteckt und relativ einfach getauscht werden. Damit ist es möglich, den OMTM-Transceiver ohne Installationsausrüstung und -prozesse wesentlich zu verändern und sich an das jeweilige Übertragungsmedium anzupassen.

Bevorzugt ist der Empfangsverstärker der erfindungsgemäßen Telekommunikationssende- und -empfangseinrichtung geeignet, je nach Eigenschaften des optischen Übertragungsmediums automatisch hinsichtlich einer optimalen Übertragungsverbindung eingestellt zu werden. Damit kann auf die Eigenschaften verschiedener Längen des optischen Übertragungsmediums, d. h. der Anschlussleitung, besonders in Hinblick auf Dämpfung der optischen Signale reagiert werden. Dies kann z. B. beim Verbindungsaufbau geschehen, wobei die Empfangsverstärkereinstellungen an beiden an der Übertragung beteiligten Geräten vorgenommen werden und sich während der restlichen Dauer der Verbindung nicht mehr ändern.

Bevorzugt ist bei der erfindungsgemäßen Telekommunikationssende- und -empfangs-einrichtung in Senderichtung zwischen der analogen Signalverarbeitungsvorrichtung und dem Sendeverstärker ein Vorverzerrer und in Empfangsrichtung zwischen dem Empfangsverstärker und der analogen Signalverarbeitungseinrichtung ein Entzerrer geschaltet. Dadurch kann die Reichweite und Robustheit der optischen Übertragungsstrecken durch geeignete Signalver- und -entzerrungsverfahren optimiert werden.

Als besonderer Vorteil sind der elektro-optische Wandler mit einem ersten optischen Übertragungsmedium und der opto-elektrische Wandler mit einem zweiten optischen Übertragungsmedium verbunden. Dies nennt man auch optischen Duplex-Betrieb, d. h. es ist ein Lichtwellenleiter pro Übertragungsrichtung vorhanden. Im Duplex-Betrieb sind keine Bandpläne zu berücksichtigen, d. h. es können alle Träger von T1 bis TMₘ bzw. TNₙ verwendet werden. Die bei den Bandplänen üblichen Einteilungen der Trägerfrequenzen für beide Richtungen können entfallen. Die bisher notwendigen Lücken an den Übergängen zwischen den Trägerfrequenzgruppen sind damit nicht mehr erforderlich. Dadurch wird die übertragbare Datenrate höher.

Mit weiterem Vorteil sind alternativ der elektro-optische Wandler und der opto-elektrische Wandler ausgangs- bzw. eingangsseitig über einen optischen Richtkoppler mit jeweils einem optischen Übertragungsmedium verbunden. Dies wird auch optischer Simplex-Betrieb genannt, wobei für beide Übertragungsrichtungen nur ein Lichtwellenleiter, z. B. POF, verwendet wird. Die POF-Bandpläne für den Simplexbetrieb hängen von der Qualität der verwendeten Koppler an beiden Enden der optischen Übertragungstrecke ab. Wenn sie sich durch ein fehlendes Echo auszeichnen, dann können die gleichen Bandpläne wie beim Duplexbetrieb zur Anwendung kommen. Tritt Echo auf, dann könnten auch dieselben Bandpläne mit Richtungstrennung wie bei Cu-DA verwendet werden.

Bevorzugt ist bei der erfindungsgemäßen Telekommunikationssende- und -empfangs-einrichtung der elektro-optische Wandler bzw. optische Sender als LED oder Laserdiode mit oder ohne Verzerrer ausgebildet.

Weiterhin vorteilhaft ist, dass der opto-elektrische Wandler (optischer Empfänger) als Pin-Diode oder Lawinenphotodiode (APD) mit oder ohne Entzerrer ausgebildet ist.

Mit besonderem Vorteil ist die erfindungsgemäße Telekommunikationssende- und -empfangseinrichtung als Medienkonverter ausgebildet, der die Datenübertragung von einer elektrischen Mehrträgermodulationsübertragung zu einer optischen Mehrträgermodulationsübertragung oder umgekehrt unter Ausnutzung der jeweils belegten Übertragungskanäle wandelt. Im Gegensatz zu den oben beschriebenen bekannten Medienkonvertern ist der Gegenstand der vorliegenden Erfindung auch für den Simplex-Betrieb über Lichtwellenleiter geeignet, welche eine relativ geringe nutzbare spektrale Bandbreite aufweisen, wie z. B. SI-POF. Durch das weniger effektive Codierungsverfahren sinkt bei den bisher bekannten Medienkonvertern durch Nutzung großer spektraler Bandbreiten bei steigender Länge der optischen Übertragungsstrecke die Übertragungsbandbreite deutlich. Das in der vorliegenden Erfindung beschriebene Verfahren und die dazugehörige Vorrichtung nutzen die spektrale Anteile der optischen Übertragungsmedien (z. B. SI-POF), welche mit steigender Gesamtlänge der Übertragungsstrecke am wenigstens gedämpft werden, womit eine deutliche Erhöhung der Reichweite des Gesamtsystems im Vergleich mit anderen Lösungen erreicht werden kann. Es versteht sich, dass der als Medienkonverter ausgebildete erfindungsgemäße OMTM-Transceiver nicht nur für die Anbindung von Telekommunikationsteilnehmern, sondern für andere breitbandige Anwendungen wie z. B. im industriellen Umfeld verwendet werden kann.

Alternativ kann der erfindungsgemäße Medienkonverter auch in einer Kabelmuffe eingesetzt werden, wobei am Eingang der Kabelmuffe eine Cu-DA mit einem "elektrischen" Mehrträgersignal, sowie Basisbandtechnologien wie z. B. POTS oder ISDN BRA anliegen. Diese werden mittels eines Splitters spektral abgetrennt. Am Ausgang wird durch einen erfindungsgemäßen OMTM-Transceivers der eine Teil des Signals für die Übertragung über einen Lichtwellenleiter, z. B. POF, aufbereitet und der andere Teile einer normalen Cu-DA zugeführt (auf der der POTS/ISDN BRA-Signalanteil übertragen wird).

In besonders vorteilhafter Weise ist die erfindungsgemäße Telekommunikationssende- und -empfangseinrichtung bei einem Telekommunikationsteilnehmer als mindestens eine Schnittstelleneinrichtung in einer Verteilereinrichtung ausgebildet, wobei über diese mindestens eine Schnittstelleneinrichtung eine Mehrzahl von Endgeräten über optische Übertragungsmedien verbindbar sind. Die Endgeräte werden dabei direkt über Lichtwellenleiter angebunden, wobei in Abhängigkeit der Schnittstellen des Endgerätes ein OMTM-Transceiver mit einer Ethernet-Schnittstelle realisiert in einem einzigen Medienkonverter erforderlich ist. Verfügt das Endgerät über eine optische OMTM-Schnittstelle, kann auf die Umwandlung in Ethernet-Signale verzichtet werden.

Bevorzugt ist das optische Übertragungsmedium der erfindungsgemäßen Telekommunikationssende- und -empfangseinrichtung aus POF, speziell aus SI-POF ausgebildet. Damit ergeben sich die bereits vorstehend genannten Vorteile beispielsweise gegenüber Glasfaser.

### KURZE BESCHREIBUNG DER FIGUREN

Weitere Einzelheiten, Merkmale und Vorteile der vorliegenden Erfindung ergeben sich aus der nachfolgenden Beschreibung unter Bezugnahme auf die Zeichnungen. Darin zeigen:
- Fig. 1: eine schematische Darstellung einer Frequenzverteilung einer bevorzugten Ausführungsform des erfindungsgemäßen Telekommunikationsübertragungsverfahrens;
- Fig. 2: eine schematische Darstellung eines ersten Ausführungsbeispiels eines Telekommunikationsteilnehmerzugangs, bei dem das erfindungsgemäße Telekommunikationsübertragungsverfahren angewendet wird;
- Fig. 3: eine schematische Darstellung eines zweiten Ausführungsbeispiels eines Telekommunikationsteilnehmerzugangs, bei dem das erfindungsgemäße Telekommunikationsübertragungsverfahren angewendet wird;
- Fig. 4: eine schematische Darstellung eines dritten Ausführungsbeispiels eines Telekommunikationsteilnehmerzugangs, bei dem das erfindungsgemäße Telekommunikationsübertragungsverfahren angewendet wird;
- Fig. 5: ein Blockschaltbild einer herkömmlichen Telekommunikationssende- und -empfangseinrichtung für xDSL-Anwendungen;
- Fig. 6: ein Blockschaltbild einer ersten beispielhaften Ausführungsform der erfindungsgemäßen Telekommunikationssende- und -empfangseinrichtung;
- Fig. 7: ein Blockschaltbild einer zweiten beispielhaften Ausführungsform der erfindungsgemäßen Telekommunikationssende- und -empfangseinrichtung;
- Fig. 8: eine schematische Darstellung eines ersten Ausführungsbeispiels eines Telekommunikationsteilnehmerzugangsnetzes, in dem die erfindungsgemäße Telekommunikationssende- und -empfangseinrichtung als Medienkonverter eingesetzt ist;
- Fig. 9: eine schematische Darstellung eines zweiten Ausführungsbeispiels eines Telekommunikationsteilnehmerzugangsnetzes, in dem die erfindungsgemäße Telekommunikationssende- und -empfangseinrichtung als Medienkonverter eingesetzt ist;
- Fig. 10: eine schematische Darstellung eines dritten Ausführungsbeispiels eines Telekommunikationsteilnehmerzugangsnetzes, in dem die erfindungsgemäße Telekommunikationssende- und -empfangseinrichtung als Medienkonverter eingesetzt ist;
- Fig. 11: eine schematische Darstellung eines vierten Ausführungsbeispiels eines Telekommunikationsteilnehmerzugangsnetzes, in dem die erfindungsgemäße Telekommunikationssende- und -empfangseinrichtung als Medienkonverter eingesetzt ist;
- Fig. 12: eine schematische Darstellung eines fünften Ausführungsbeispiels eines Telekommunikationsteilnehmerzugangsnetzes, in dem die erfindungsgemäße Telekommunikationssende- und -empfangseinrichtung als Medienkonverter eingesetzt ist;
- Fig. 13: eine schematische Darstellung eines sechsten Ausführungsbeispiels eines Telekommunikationsteilnehmerzugangsnetzes, in dem die erfindungsgemäße Telekommunikationssende- und -empfangseinrichtung als Medienkonverter eingesetzt ist;
- Fig. 14: eine schematische Darstellung einer Übersicht der Bestandteile eines herkömmlichen Telekommunikationsteilnehmerzugangsnetzes;
- Fig. 15: eine schematische Darstellung von Bestandteilen eines herkömmlichen Telekommunikationsteilnehmerzugangsnetzes in ADSUADSL2/ADSL2+-Technik;
- Fig. 16a: eine schematische Darstellung einer ADSL/ADSL2-Frequenzaufteilung des Standes der Technik;
- Fig. 16b: eine schematische Darstellung einer ADSL2+ -Frequenzaufteilung des Standes der Technik;
- Fig. 17: eine schematische Darstellung eines herkömmlichen xDSL-Teilnehmerzugangsnetzes;
- Fig. 18a: eine schematische Darstellung einer beispielhaften VDSL2-Frequenz-aufteilung des Standes der Technik;
- Fig. 18b: eine schematische Darstellung einer weiteren beispielhaften VDSL2-Frequenzaufteilung des Standes der Technik.

### AUSFÜHRLICHE BESCHREIBUNG DER FIGUREN

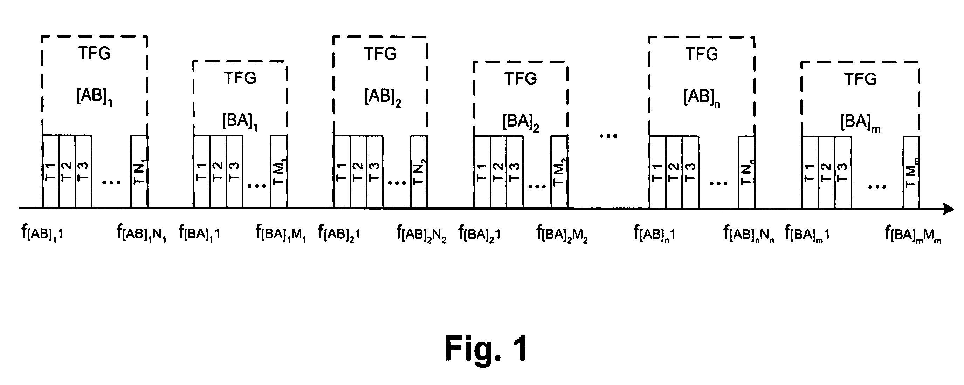

Fig. 1 zeigt eine schematische Darstellung einer Frequenzverteilung einer bevorzugten Ausführungsform des erfindungsgemäßen Telekommunikationsübertragungsverfahrens. Auf der Abszisse ist die Frequenz aufgetragen, auf der Ordinate die spektrale Leistungsdichte. Beispielhaft sind in Fig. 1 die einzelnen Trägerfrequenzgruppen TFG dargestellt, in Richtung von Lokation A zu Lokation B mit der Angabe [AB], in Richtung von Lokation B zu Lokation A mit der Angabe [BA] bezeichnet. In Richtung von A nach B sind drei von insgesamt n, in Richtung von B nach A drei von insgesamt m Trägerfrequenzgruppen TFG dargestellt, wobei jede der n Trägerfrequenzgruppen in Richtung von A nach B Nₙ Trägerfrequenzen T1ₙ, T2ₙ, ... , TNₙ und jeder der m Trägerfrequenzgruppe in Richtung von B nach A Mₘ Trägerfrequenzen T1ₘ, T2ₘ, ... , TMₘ aufweist. Die die Trägerfrequenzgruppen frequenzmäßig nach unten und oben begrenzenden Trägerfrequenzen sind in Richtung von A nach B mit *f*_{[*AB*]*n*}1 bis *f*_{[*AB*]}*ₙN*m und in Richtung von B nach A mit *f*_{[*BA*]*m*}1 bis *f*_{[*BA*]}*ₘM*m bezeichnet. Die Anzahlen der Trägerfrequenzgruppen *n* und *m* in Richtung von A nach B bzw. in Richtung von B nach A unterscheiden sich nur um 1, d. h. es gibt lediglich drei Möglichkeiten: *n = m, n = m + 1 und n* = *m - 1.* Andere Möglichkeiten sind nicht sinnvoll, denn dann lägen mindestens zwei Trägerfrequenzgruppen in einer Richtung nebeneinander und wären durch einen Frequenzzwischenraum getrennt. Die zwischen den einzelnen TFG vorhandenen Frequenzzwischenräume wurden bei bisherigen (xDSL-) Übertragungsverfahren nicht verwendet. Das erfindungsgemäße Verfahren ermöglicht dies jedoch durch die besonderen Eigenschaften des optischen Übertragungsmediums. Dadurch ist eine Erhöhung der Übertragungsdatenrate möglich.

In den Fig. 2, 3 und 4 sind Ausführungsbeispiele eines Telekommunikationsteilnehmerzugangs, bei denen das erfindungsgemäße Telekommunikationsübertragungsverfahren angewendet wird, schematisch dargestellt. Man bemerke, dass die meist über Lichtwellenleiter laufende Verbindung der Vermittlungsstelle CO mit dem Hauptnetz (Backbone) in den Figuren grundsätzlich nicht dargestellt ist. Den Ausführungsbeispielen in den Fig. 2, 3 und 4 gemeinsam ist, dass die Vermittlungsstelle CO mit dem Kabelverzweiger RT über eine optische Übertragungsstrecke OF verbunden ist, wobei parallel dazu eine Cu-DA bereitgestellt ist, über die die Standard-Telefondienste POTS (Plain Old Telephone Service) sowie ISDN übertragen werden. Weiterhin gemeinsam ist bei den Fig. 2, 3 und 4 die auf dem jeweils oberen Verbindungszweig dargestellte herkömmliche Verbindung des Kabelverzweigers RT mit den Teilnehmergeräten CPE über eine Cu-DA, wobei das Signal im RT über einen DSLAM und einen Splitter für die Übertragung auf der Cu-DA codiert bzw. decodiert sowie beim Teilnehmer entsprechend decodiert bzw. codiert wird.

Erfindungsgemäß ist die in Fig. 2 dargestellte untere Verbindung zwischen RT und CPE, die zusätzlich zu einer herkömmlichen Cu-DA Leitung, mit POTS/ISDN/RPS bezeichnet, die Verbindung OMTM mittels optischem Übertragungsmedium darstellt. Man beachte, dass für die Signalübertragung über OMTM kein Splitter mehr erforderlich ist.

In Fig. 3 erfolgt die Verbindung zwischen RT und CPE nach dem erfindungsgemäßen Verfahren zunächst nach herkömmlichem xDSL-Verfahren über eine Cu-DA, die in einer Muffe CN endet, und von dort über ein optisches Übertragungsmedium, vorzugsweise POF, zu den Teilnehmergeräten CPE. Dabei wird in der Muffe das "elektrische" Signal in ein für die Übertragung über die POF geeignetes "optisches" Signal umgewandelt. Beim Teilnehmer wird dieses optische Signal entsprechend zurückgewandelt.

Ein zu Fig. 3 ähnliches Beispiel zeigt die Ausführungsform in Fig. 4. Im Unterschied zu Fig. 4 ist die Muffe CN mit einem Splitter versehen, der das xDSL-Signal vom Kabelverzweiger RT kombiniert und mittels eines optischen Transceivers in ein optisches Signal für die Übertragung über Lichtwellenleiter, z. B. POF, einerseits und über eine geeignete Schnittstelle in ein elektrisches Signal, das über eine normale Cu-DA übertragen wird, aufteilt. Beide Übertragungsstrecken laufen parallel zum Teilnehmer CPE.

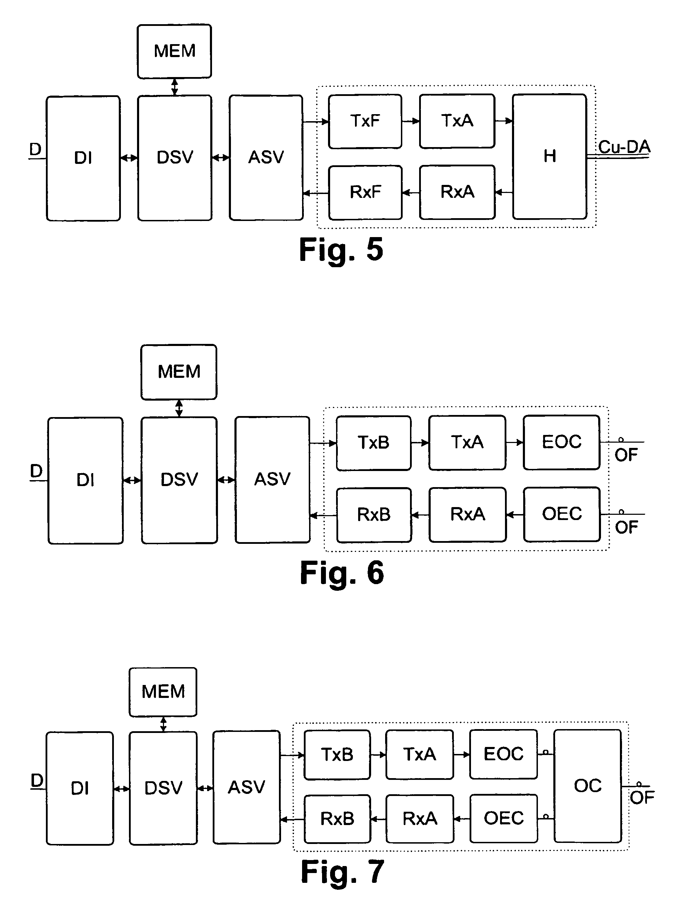

Fig. 5 zeigt ein Blockschaltbild einer herkömmlichen Telekommunikationssende- und -empfangseinrichtung für xDSL-Anwendungen, in diesem Dokument auch als xDSL-Transceiver bezeichnet. Die Darstellung erfolgt an dieser Stelle, um nachfolgend die Unterschiede und Vorteile der erfindungsgemäßen Telekommunikationssende- und -empfangseinrichtung aufzuzeigen. Der xDSL-Transceiver weist auf der einen Seite eine Datenschnittstelle DI auf. Mit der Datenschnittstelle DI verbunden ist die digitale Signalverarbeitungseinrichtung DSV. Mit der DSV verbunden ist ein Speicher MEM, der die Bandplan-Daten, also wie die Trägerfrequenzen *f*_{[*AB*]11} bis *f*_{[*AB*]}*ₙNₙ* bzw. *f*_{[*BA*]}*ₘMₘ* genau aufgeteilt sind, enthält. Eine analoge Signalverarbeitungseinrichtung ASV ist ebenfalls mit der digitalen Signalverarbeitungseinrichtung verbunden. Mit der ASV ist ein elektrisches Sende-/Empfangsmodul ETM verbunden, das folgende Bestandteile aufweist: in Senderichtung einen Sendefilter TxF, einen Sendeverstärker TxA sowie in Empfangsrichtung einen Empfangsfilter RxF und einen Empfangsverstärker RxA. Mit dem Ausgang des Sendeverstärkers TxA und mit dem Eingang des Empfangsverstärkers RxA verbunden ist eine xDSL-Gabel H, die als Richtkoppler fungiert und mit der Anschlussleitung Cu-DA verbunden ist. Auch die xDSL-Gabel H ist Bestandteil des elektrischen Sende-/Empfangsmoduls ETM. Die Funktionsweise des in Fig. 5 dargestellten xDSL-Transceiver ist bekannt und entfällt deshalb an dieser Stelle.

Fig. 6 zeigt ein Blockschaltbild einer ersten beispielhaften Ausführungsform der erfindungsgemäßen Telekommunikationssende- und -empfangseinrichtung, die auch als Duplex-OMTM-Transceiver bezeichnet wird. Wie bereits erwähnt sind die Bestandteile Datenschnittstelle DI, digitale Signalverarbeitungseinrichtung DSV, analoge Signalverarbeitungseinrichtung ASV und Speicher MEM identisch mit denen der Fig. 5, wobei der Inhalt der jeweiligen Speicher MEM (Bandplan) abweichend sein kann. Verbunden mit der analogen Signalverarbeitungseinrichtung ASV ist ein optisches Sende-/Empfangsmodul OTM, das in gestrichelten Linien dargestellt ist und folgende Bestandteile enthält: in Senderichtung einen (optionalen) Vorverzerrer TxB, einen Sendeverstärker TxA sowie einen elektro-optischen Wandler EOC, und in Empfangsrichtung einen opto-elektrischen Wandler OEC, einen Empfangsverstärker RxA sowie einen (optionalen) Entzerrer RxB. Der elektro-optischen Wandler EOC ist mit einer optischen Sendeübertragungsstrecke OF, vorzugsweise aus POF gebildet, verbunden. In gleicher Weise ist der opto-elektrischen Wandler OEC mit einer optischen Empfangsübertragungsstrecke OF, vorzugsweise aus POF gebildet, verbunden. Wie bereits oben erläutert ist der erfindungsgemäße OMTM-Transceiver im Duplex-Modus ausgebildet, da über unterschiedliche optische Leitungen gesendet bzw. empfangen wird.

Die Tatsache, dass bis auf die Bestandteile des optischen Sende-/Empfangsmoduls sämtliche Bauteile identisch mit den Bestandteilen eines herkömmlichen xDSL-Transceivers sind, bildet einen deutlichen Vorteil der vorliegenden Erfindung gegenüber anderen Übertragungsverfahren, die mittels anderer Codierungsverfahren Daten beispielsweise über POF übertragen. Denn im Gegensatz zu diesen anderen Verfahren kann bei der vorliegenden Erfindung Gebrauch von ausgereiften sowie preiswerten xDSL-ICs gemacht werden. Die im Vergleich zum xDSL-Transceiver unterschiedlichen Bestandteile sind Standard-Bauteile, deshalb ist für den erfindungsgemäßen OMTM-Transceiver keine aufwändige Neuentwicklung von Schaltungen notwendig, was die Dauer bis zur Marktreife entscheidend erheblich verkürzt.

Fig. 7 zeigt ein Blockschaltbild einer zweiten beispielhaften Ausführungsform des erfindungsgemäßen OMTM-Transceivers in der Simplex-Ausführung. Die Bestandteile sind im wesentlichen mit denen aus Fig. 6 identisch, weshalb hier auf eine erneute ausführliche Beschreibung verzichtet wird. Der Unterschied zu der in Fig. 6 dargestellten ersten Ausführungsform liegt darin, dass zur Signalübertragung über die optische Übertragungsstrecke nicht zwei, sondern lediglich ein Lichtwellenleiter, z. B. POF verwendet wird. Dazu muss das Ausgangssignal des elektro-optischen Wandlers EOC und das Eingangssignal des opto-elektrischen Wandlers OEC in geeigneter Weise in den bzw. von dem Lichtwellenleiter gekoppelt werden. Dies kann beispielsweise durch einfache optische Koppler bewerkstelligt werden. Darüber hinaus kann ein ggf. auftretendes Echo durch Wellenlängenmultiplexverfahren (WDM) reduziert werden.

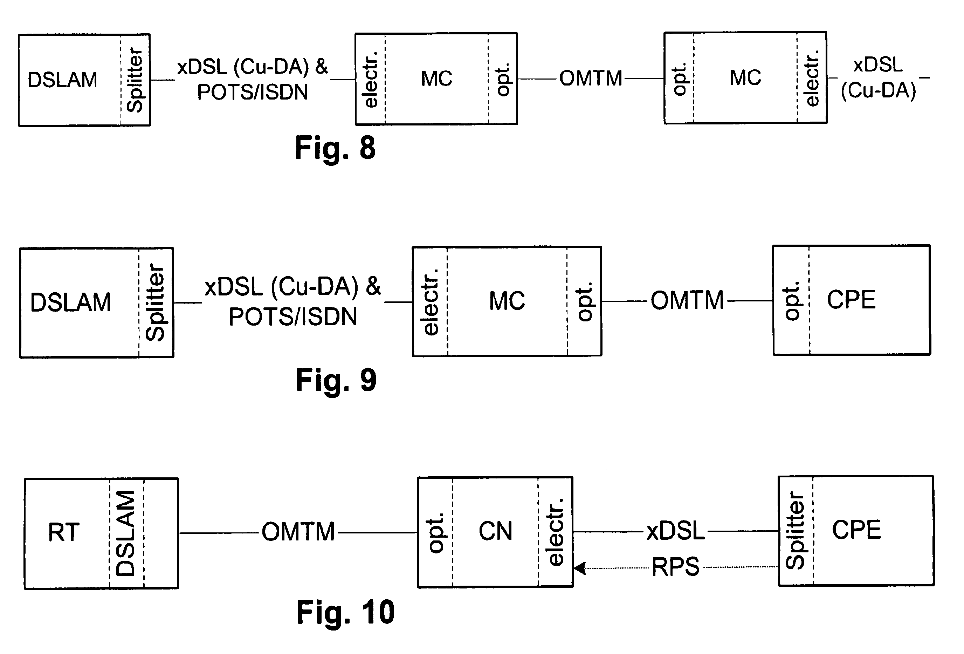

Nachfolgend zeigen die Fig. 8 bis 13 schematische Darstellungen von Ausführungsbeispielen eines Telekommunikationsteilnehmerzugangsnetzes, in dem die erfindungsgemäße Telekommunikationssende- und -empfangseinrichtung als Medienkonverter eingesetzt ist. Die Umwandlung oder das Konvertieren ist dahin gehend zu verstehen, dass ein für eine Signalübertragung über ein drahtgebundes Medium geeignetes Signal, also ein elektrisches Signal, in ein für eine Signalübertragung über ein optisches Medium geeignetes Signal umgewandelt wird oder umgekehrt. Derartige Medienkonverter spielen in der derzeitigen Telekommunikationstechnik eine sehr große Rolle, da immer mehr Endgeräte optische Signaleingänge aufweisen, jedoch die Zuführungsnetze meistens nicht durchgängig aus optischen Übertragungsmedien bestehen. Des Weiteren sind Medienkonverter beispielsweise erforderlich, um eine Abwärtskompatibilität von Einrichtungen mit optischen Schnittstellen mit älteren Einrichtungen zu erhalten, die lediglich über elektrische Schnittstellen verfügen. Es ist anzumerken, dass die hier beispielhaft gezeigten Ausführungsformen nicht alle Möglichkeiten zeigen, wie die erfindungsgemäße Telekommunikationssende- und - empfangseinrichtung vom einschlägigen Fachmann als Medienkonverter eingesetzt werden kann.

In Fig. 8 ist ein DSLAM beispielsweise aus einem RT gezeigt, das über einen xDSL-Splitter nach bekannter xDSL-Technik über eine Cu-DA mit einem erfindungsgemäßen Medienkonverter MC verbunden ist. Der Medienkonverter MC wandelt das Signal derart um, dass es über das optische Übertragungsmedium, vorzugsweise POF, mittels optischer Mehrträgermodulation OMTM übertragen werden kann. Am Ende der optischen Übertragungsstrecke OMTM ist ein weiterer erfindungsgemäßer Medienkonverter MC angeordnet, der das Signal entsprechend für die elektrische Übertragung über Cu-DA zurückkonvertiert. Ein Beispiel für eine derartige Anwendung der Erfindung ist das Ersetzen von Cu-DA durch POF auf einer Übertragungsstrecke, durch das die oben genannten Vorteile der POF genutzt werden können.

Fig. 9 zeigt ein Telekommunikationsteilnehmerzugangsnetz, das im Gegensatz zu dem in Fig. 8 dargestellten Netz keinen zweiten Medienkonverter MC, sondern einen direkt an das mittels OMTM übertragende optische Übertragungsmedium angeschlossenen optischen Leitungsabschluss beim Teilnehmer CPE aufweist.

Fig. 10 zeigt ein RT, das über ein optisches Übertragungsmedium, z. B. POF, mit einem erfindungsgemäßen Medienkonverter MC verbunden ist. Die Signalübertragung dazwischen erfolgt optisch mittels OMTM nach dem erfindungsgemäßen Verfahren. Der Konverter wandelt das Signal in ein für die Übertragung per xDSL auf einer Cu-DA geeignetes Signal um. Die Signalübertragung zum Teilnehmer CPE erfolgt mit herkömmlicher xDSL-Technik, wobei beim Teilnehmer CPE ein Splitter die Aufteilung der Signale gemäß der angeschlossenen Dienste übernimmt. Zum Zwecke der Speisung ist der Medienkonverters MC über die Cu-DA-Verbindung RPS mit dem Teilnehmer CPE verbunden.

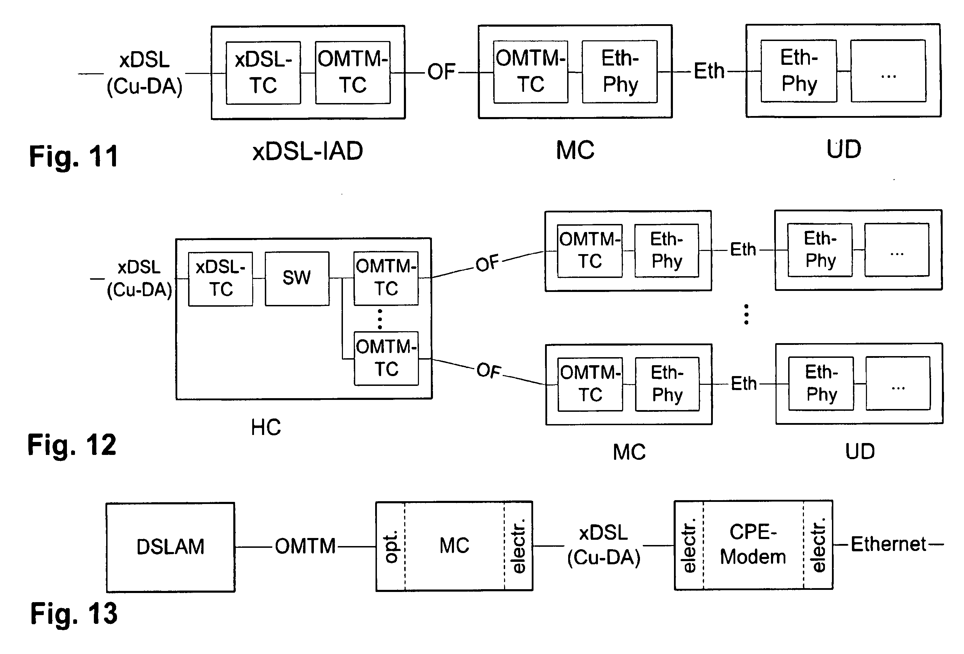

In Fig. 11 ist die beispielhafte Einbindung eines erfindungsgemäßen OMTM-Transceivers in eine integrierte Zugangsvorrichtung schematisch als Blockschaltbild dargestellt. Innerhalb der integrierten Zugangsvorrichtung xDSL-IAD, die in ihrem (hier links dargestellten) xDSL-Abschnitt über einen xDSL-Transceiver xDSL-TC mit einer Cu-DA verbunden ist, ist ein OMTM-Transceiver OMTM-TC angeordnet, der wiederum mit dem optischen Übertragungsmedium OF verbunden ist. Eine derartige integrierte Vorrichtung ist aus den bereits oben genannten Gründen leicht herzustellen, da sich der OMTM-Transceiver aus üblichen Standardkomponenten zusammensetzt. Der erfindungsgemäße Medienkonverter MC ist hier derart ausgebildet, dass neben dem OMTM-Transceiver eine Ethernet-Schnittstelle ausgebildet ist. Diese wird für den Anschluss eines herkömmlichen Ethernet-Netzwerks genutzt, wobei im vorliegenden Beispiel eine Endgerät UD über eine weitere Ethernet-Schnittstelle angeschlossen ist, deren Bestandteile preiswerte Massenartikel sind.

Fig. 12 zeigt eine zu Fig. 11 ähnliche Konfiguration mit dem Unterschied, dass in diesem Ausführungsbeispiel eine Vielzahl von Endgeräten UD über entsprechende Medienkonverter MC mit einer Hauszentrale HC verbunden sind, die mittels herkömmlicher xDSL-Technik über Cu-DA angeschlossen ist. Im Unterschied zu Fig. 11 ist hinter dem xDSL-Transceiver xDSL-TC ein Switch SW angeordnet, der die Signale auf die Vielzahl von Endgeräten UD verteilt. Jedem über POF angeschlossenen Endgerät ist jeweils ein OMTM-Transceiver OMTM-TC in der Hauszentrale HC sowie in dem entsprechenden Medienkonverter MC zugeordnet. Dieses Ausführungsbeispiel ist ein klassisches Beispiel für eine Heimvernetzung, die je nach Eigenschaften der Hauszentrale HC eine Anzahl von Endgeräten UD breitbandig anbinden kann, wobei die Vorteile der POF als Übertragungsmedium voll zum Tragen kommen.

Fig. 13 zeigt ein weiteres Ausführungsbeispiel, das die Anwendung des erfindungsgemäßen Verfahrens bzw. der erfindungsgemäßen Einrichtung in dem Fall zeigt, wo möglichst auf vorhandene Einrichtungen zurückgegriffen und dennoch die Vorteile der POF genutzt werden sollen. Dabei wird der erfindungsgemäße Medienkonverter als Teilnehmeranschlusseinrichtung, z. B. als Hausabschluss, eingesetzt. Die Verbindung zwischen diesem Hausabschluss und dem RT mit eingebautem DSLAM erfolgt über POF mittels des erfindungsgemäßen OMTM-Verfahrens. Die Übertragung im Haus erfolgt in diesem Beispiel über die vorhandene Cu-DA mittels xDSL, wobei das vorhandene CPE-Modem weiterhin genutzt werden kann, das über eine Ethernet-Schnittstelle verfügt, mit der die Endgeräte angeschlossen werden können.

Wie bereits oben erwähnt sind zahlreiche weitere Szenarien denkbar, wie das erfindungsgemäße Verfahren und die erfindungsgemäße Einrichtung in einem Teilnehmerzugangsnetz eingesetzt werden können.

Mit der erfindungsgemäßen Telekommunikationsübertragungsverfahren sowie der zugehörige Einrichtung wurde eine Möglichkeit geschaffen, den Flaschenhals für die Übertragung hoher Datenraten auf dem Weg zum Teilnehmer zu erweitern bzw. zu vermeiden, indem auf flexible Art und Weise eine Alternative zur bestehenden Cu-DA-Infrastruktur bereitgestellt wird, die auf der Basis vorhandener elektronischer Komponenten preiswert und zeitnah zu realisieren ist sowie die Vorteile der optischen Übertragungstechnik hinsichtlich Nebensprechen auf Leitungen und elektromagnetischer Verträglichkeit nutzt.

### VERZEICHNIS DER ABKÜRZUNGEN

| | Deutsch | Englisch |
|---|---|---|
| 8-PAM | 8-Pegel-Pulsamplitudenmodulation | 8-Level-Pulse Amplitude Modulation |
| ADSL | | Asymmetrical Digital Subscriber Line |
| ADSL2 | | Asymmetrical Digital Subscriber Line 2^{nd} Generation |
| ADSL2+ | | Asymmetrical Digital Subscriber Line 2^{nd} Generation+ |
| APD | Lawinenphotodiode | Avalanche Photo Diode |
| ASIC | Anwendungsspezifische Integrierte Schaltung | Application Specific Integrated Circuit |
| ASV | Analoge Signalverarbeitungseinrichtung | Analog Signal Processor |
| CC | | Cross Connector |
| CN | Muffe | Connector |
| CO | Vermittlungsstelle | Central Office |
| CPE | | Customer Premises Equipment |
| Cu-DA | Kupferdoppelader | Copper Twisted Pair Cable |
| D | Daten | Data |
| DI | Datenschnittstelle | Data Interface |
| DPBO | | Downstream Power Back-Off |
| DS | Abwärtsrichtung | Downstream |
| DSLAM | | Digital Subscriber Line Access Multiplexer |
| DSV | Digitale Signalverarbeitungseinrichtung | Digital Signal Processor |
| EOC | Elektro-optischer Wandler | Electro-optical Converter |
| ETH | | Ethernet |
| ETM | | Electrical Transceiver Module |
| FEC | Vorwärtsfehlerkorrektur | Forward Error Correction |
| FEXT | Fern-Nebensprechen | Far End Crosstalk |
| FPGA | Frei programmierbarer Logikschaltkreis | Field Programmable Gate Array |
| FTTB | | Fiber-To-The-Building |
| FTTC | | Fiber-To-The-Curb |
| H | Gabel | Hybrid |
| HC | Hauszentrale | |
| HDSL | | High bitrate Digital Subscriber Line |
| IAD | | Integrated Access Device |
| IC | Integrierte Schaltung | Integrated Circuit |
| IPTV | | Internet Protocol Television |
| ISDN BRA | | Integrated Services Digital Network Basis-rate Access |
| ITU | | International Telecommunications Union |
| LED | Leuchtdiode | Light Emitting Diode |
| MC | Medienkonverter | Media Converter |
| MCU | | Multi-Commercial Units |
| MEM | Speicher | Memory |
| MHU | | Multi Hospitality Units |
| MPU | | Multi-Public Units |
| MSDSL | | Multirate Symmetrical Digital Subscriber Line |
| MTU/MDU | | Multi-Tenant/Dwelling Units |
| NEXT | Nah-Nebensprechen | Near End Crosstalk |
| OC | Optischer Koppler | Optical Coupler |
| OEC | Opto-elektrischer Wandler | Opto-electrical Converter |
| OF | Optische Faser | Optical Fiber |
| OLT | | Optical Line Termination |
| OMTM | Optische Mehrträgermodulation | |
| ONT | | Optical Network Termination |
| OTM | | Optical Transceiver Module |
| PHY | | Physical Layer Interface |
| POF | Optische Polymerfaser | Polymer Optical Fiber |
| POTS | | Plain Old Telephone Service |
| PSD | | Power Spectral Density |
| RPS | | Remote Power Supply |
| RT | Kabelverzweiger | Remote Terminal |
| RxA | Empfangsverstärker | Receiver Amplifier |
| RxB | Entzerrer | Receiver Bias |
| RxF | Empfangsfilter | Receiver Filter |
| SCH | Sprachkanal | Speech Channel |
| SHDSL | | Symmetrical High bitrate Digital Subscriber Line |
| SI-POF | Stufenindex-POF | Stepindex-POF |
| SW | | Switch |
| TC | Sende-/Empfangseinrichtung | Transceiver |
| TFG | Trägerfrequenzgruppe | |
| TxA | Sendeverstärker | Transmitter Amplifier |
| TxB | Vorverzerrer | Transmitter Bias |
| TxF | Sendefilter | Transmitter Filter |
| UD | Endgerät | User Device |
| UPBO | | Upstream Power Back-Off |
| US | Aufwärtsrichtung | Upstream |
| VDSL1 | | Very high bitrate Digital Subscriber Line 1 st Generation |
| VDSL2 | | Very high bitrate Digital Subscriber Line 2nd Generation |
| VoIP | | Voice over Internet protocol |
| xPON | | x = A (ATM), B (Broadband), E (Ethernet), G (Gigabit), GE (Gigabit Ethernet) Passive Optical Network |

## Patentansprüche

1. Telekommunikationsübertragungsverfahren zur Übertragung von bidirektionalen Datenströmen mittels Mehrträgermodulation zwischen Lokationen A und B über eine Übertragungsstrecke, die einen optischen Teil und teilweise einen elektrischen Teil aufweist, wobei die Übertragungskanäle (T1_{n,} T2ₙ, ... , TNₙ; T1ₘ. T2ₘ, ... , TMₘ) so den Trägerfrequenzen zugeordnet sind, dass in Richtung von A nach B n Trägerfrequenzgruppen [AB]₁ bis [AB]ₙ, die jeweils Trägerfrequenzen f_{[AB]n}1 bis f_{[AB]n}Nₙ aufweisen, und in Richtung von B nach A m Trägerfrequenzgruppen [BA]₁ bis [BA]ₘ , die jeweils Trägerfrequenzen f_{[BA]m}1 bis f_{[BA]m}Mₘ aufweisen, verwendet werden, wobei n der Index der n-ten Trägerfrequenzgruppe und N die maximale Übertragungskanalanzahl pro n-ter Trägerfrequenzgruppe in Richtung von A nach B, und wobei m der Index der m-ten Trägerfrequenzgruppe und M die maximale Übertragungskanalanzahl pro m-ter Trägerfrequenzgruppe in Richtung von B nach A sind, wobei die Trägerfrequenzgruppen der unterschiedlichen Richtungen durch von *f_{[AB]x}Nₓ* und f_{[BA]x1}, mit x ≤ m sowie x ≤ n, und von f_{[BA]y}M_{y} und f_{[AB]y+1}1, mit y < m sowie y < n, begrenzte Frequenzzwischenräume voneinander getrennt sind,
**dadurch gekennzeichnet, dass**
die Übertragung der Datenströme über das optische Übertragungsmedium folgendermaßen erfolgt:
die übertrugungs Kanäle mit den Trägerfrequenzen von *f*_{[*AB*]*l*}1 bis *f*_{[*AB*]}*ₙNₙ* für m < n oder bis *f[_{BA]m}Mₘ* für m=n schließen die Trägerfrequenzen in den von *f_{[AB]xNx}* und *f*_{[*BA*]*x*1}, mit x ≤ m sowie x ≤ n, und von *f*_{[*BA*]}*_{y}M_{y}* und f_{[*AB*]*y*+1}1, mit y < m sowie y < n, begrenzten Frequenzzwischenräumen der Mehrträgermodulation jeweils in Richtung von A nach B und in Richtung von B nach A mit ein.

2. Telekommunikationsübertragungsverfahren nach Anspruch 1, **dadurch gekennzeichnet, dass** das optische Übertragungsmedium aus optischen Polymerfasern (POF) ausgebildet ist.

3. Telekommunikationsübertragungsverfahren nach Anspruch 2, **dadurch gekennzeichnet, dass** die optischen Polymerfasern (POF) als Stufenindex-POF (SI-POF) ausgebildet sind.

4. Telekommunikationsübertragungsverfahren nach einem der vorangehenden Ansprüche, **dadurch gekennzeichnet, dass** Lokation A einen optischen Leitungsabschluss (OLT) aufweist, und Lokation B eine optische Netzwerkeinheit (ONU) ist, und dass die Übertragungsstrecke zwischen beiden Lokationen aus optischen Polymerfasern ausgebildet ist.

5. Telekommunikationsübertragungsverfahren nach einem der Ansprüche 1 bis 3, **dadurch gekennzeichnet, dass** Lokation A eine optische Netzwerkeinheit (ONU) aufweist, und Lokation B ein optischer Netzwerkabschluss (ONT) ist, und dass die Übertragungsstrecke zwischen beiden Lokationen aus optischen Polymerfasern ausgebildet ist.

6. Telekommunikationsübertragungsverfahren nach ein einem der Ansprüche 1 bis 3, **dadurch gekennzeichnet, dass** Lokation A einen optischen Netzwerkabschluss (ONT) aufweist, und Lokation B ein Endgerät innerhalb eines Hausnetzes ist, und dass die Übertragungsstrecke zwischen beiden Lokationen aus optischen Polymerfasern ausgebildet ist.

7. Telekommunikationssende- und -empfangseinrichtung (MC, OMTM-TC) zur Übertragung von bidirektionalen Datenströmen für einen Teilnehmer mittels Mehrträgermodulation zwischen Lokationen A und B, die aufweist:
- eine Datenschnittstelle (DI)
- eine digitale Signalverarbeitungseinrichtung (DSV), die mit der Datenschnittstelle (DI) verbunden ist,
- eine Speichereinrichtung (MEM), die mit der digitalen Signalverarbeitungseinrichtung (DSV) verbunden ist und Aufteilungsdaten der Trägerfrequenzen f_{[AB]1}1 bis *f*_{[*AB*]}*ₙNₙ* und *f*_{[*BA*]}*ₘMₘ* enthält,
- in Senderichtung einen Sendeverstärker (TxA),
- in Empfangsrichtung einen Empfangsverstärker (RxA), und
- eine analoge Signalverarbeitungseinrichtung (ASV), die mit der digitalen Signalverarbeitungseinrichtung (DSV), mit dem Eingang des Sendeverstärkers (TxA) und mit dem Ausgang des Empfangsverstärkers (RxA) verbunden ist,
**gekennzeichnet durch**
einen elektro-optischen Wandler (EOC) in Senderichtung, der eingangsseitig mit dem Ausgang des Sendeverstärkers (TxA) und ausgangsseitig mit einem optischen Übertragungsmedium (OF) verbunden ist, und
einen opto-elektrischen Wandler (OEC) in Empfangsrichtung, der eingangsseitig mit dem optischen Übertragungsmedium (OF) und ausgangsseitig mit dem Empfangsverstärker (RxA) verbunden ist,
wobei die die Telekommunikationssende- und -empfangseinrichtung (MC, OMTM-TC) geeignet ist, Datensignale aus der Datenschnittstelle (DI) mittels des Telekommunikationsübertragungsverfahrens nach einem der vorhergehenden Ansprüche in mehrträgermodulierte Signale zur Übertragung über das optische Übertragungsmedium (OF) zu wandeln.

8. Telekommunikationssende- und -empfangseinrichtung (MC, OMTM-TC) nach Anspruch 7, **dadurch gekennzeichnet, dass** der Empfangsverstärker (RxA) geeignet ist, je nach Eigenschaften des optischen Übertragungsmediums (OF) automatisch hinsichtlich einer optimalen Übertragungsverbindung eingestellt zu werden.

9. Telekommunikationssende- und -empfangseinrichtung (MC, OMTM-TC) nach Anspruch 7 oder 8, **dadurch gekennzeichnet, dass** darüber hinaus in Senderichtung zwischen der analogen Signalverarbeitungsvorrichtung (ASV) und dem Sendeverstärker (TxA) ein Vorverzerrer (TxB) geschaltet ist, und dass in Empfangsrichtung zwischen dem Empfangsverstärker (RxA) und der analogen Signalverarbeitungseinrichtung (ASV) ein Entzerrer (RxB) geschaltet ist.

10. Telekommunikationssende- und -empfangseinrichtung (MC, OMTM-TC) nach einem der Ansprüche 7 bis 9, **dadurch gekennzeichnet, dass** der elektro-optische Wandler (EOC) mit einem ersten optischen Übertragungsmedium (OF) und dass der opto-elektrische Wandler (OEC) mit einem zweiten optischen Übertragungsmedium (OF) verbunden ist (optischer Duplex-Betrieb).

11. Telekommunikationssende- und -empfangseinrichtung (MC, OMTM-TC) nach einem der Ansprüche 7 bis 9, **dadurch gekennzeichnet, dass** der elektro-optische Wandler (EOC) und der opto-elektrische Wandler (OEC) ausgangs- bzw. eingangsseitig über einen optischen Richtkoppler (OC) mit einem optischen Übertragungsmedium (OF) verbunden sind (optischer Simplex-Betrieb).

12. Telekommunikationssende- und -empfangseinrichtung (MC, OMTM-TC) nach einem der Ansprüche 7 bis 11, **dadurch gekennzeichnet, dass** der elektro-optische Wandler (EOC) als LED oder Laserdiode mit oder ohne Verzerrer ausgebildet ist.

13. Telekommunikationssende- und -empfangseinrichtung (MC, OMTM-TC) nach einem der Ansprüche 7 bis 12, **dadurch gekennzeichnet, dass** der opto-elektrische Wandler (OEC) als Pin-Diode oder Lawinenphotodiode (APD) mit oder ohne Entzerrer ausgebildet ist.

14. Telekommunikationssende- und -empfangseinrichtung (MC, OMTM-TC) nach einem der Ansprüche 7 bis 13, **dadurch gekennzeichnet, dass** sie als Medienkonverter (MC) ausgebildet ist, der die Datenübertragung von einer elektrischen Mehrträgermodulationsübertragung zu einer optischen Mehrträgermodulationsübertragung (OMTM) oder umgekehrt unter Ausnutzung der jeweils belegten Übertragungskanäle umwandelt.

15. Telekommunikationssende- und -empfangseinrichtung (MC, OMTM-TC) nach einem der Ansprüche 7 bis 14, **dadurch gekennzeichnet, dass** sie bei einem Telekommunikationsteilnehmer (CPE) als mindestens eine Schnittstelleneinrichtung in einer Verteilereinrichtung ausgebildet ist, wobei über diese mindestens eine Schnittstelleneinrichtung eine Mehrzahl von Endgeräten (UD) über optische Übertragungsmedien verbindbar sind.

16. Telekommunikationssende- und -empfangseinrichtung (MC, OMTM-TC) nach einem der Ansprüche 7 bis 15, **dadurch gekennzeichnet, dass** das optische Übertragungsmedium aus optischen Polymerfasern (POF) ausgebildet ist.

17. Telekommunikationssende- und -empfangseinrichtung (MC, OMTM-TC) nach einem der Ansprüche 7 bis 16, **dadurch gekennzeichnet, dass** die optischen Polymerfasern (POF) als Stufenindex-POF (SI-POF) ausgebildet sind.

## Claims

1. Telecommunications transmission method for transmitting bidirectional data streams by means of multi-carrier modulation between locations A and B via a transmission link which comprises an optical part and in some cases an electrical part, the transmission channels (T1ₙ, T2ₙ, ..., TNₙ; T1ₘ, T2ₘ, ..., TMₘ) being assigned to the carrier frequencies in such a way that, in the A to B direction n carrier frequency groups [AB]₁ to [AB]ₙ, which each have carrier frequencies *f*_{[*AB*]*n*1} to *f*_{[*AB*]}*ₘNₘ*, are used and in the B to A direction m carrier frequency groups [BA]₁ to [BA]ₘ, which each have carrier frequencies *f*_{[*BA*]*n*1} to *f*[*_{BA}*]_{*mMm*,} are used, n being the index of the *n*^{th} carrier frequency group and N being the maximum number of transmission channels per *n*^{th} carrier frequency group in the A to B direction, and m being the index of the *m*^{th} carrier frequency group and M being the maximum number of transmission channels per *m*^{th} carrier frequency group in the B to A direction, the carrier frequency groups of the different directions being separated from each other by frequency intervals, delimited by *f*_{[*AB*]*xNx*} and *f*_{[*BA*]*x*}1, where x ≤ m and x ≤ n, and by *f*_{[*BA*]*yMy*} and *f*_{[*AB*]*y*+1}1, where y < m and y < n,
**characterised in that**
the transmission of data streams via the optical transmission medium takes place in the following manner:
the transmission channels having carrier frequencies of *f*_{[*AB*]1}1 to *f*_{[*AB*]*nNn*} for m < n or to *f*_{[*BA*]*nMn*} for m=n include the carrier frequencies in the frequency intervals, delimitend by *f*_{[*BA*]*xNx*} and *f*_{[*BA*]*x*}1, where x ≤ m and x ≤ n, and by *f*_{[*BA*]*yMy*} and *f*_{[*BA*]*y*+1}1 where y < m and y < n, of the multi-carrier modulation both in the A to B direction and in the B to A direction.

2. Telecommunications transmission method according to claim 1, **characterised in that** the optical transmission medium is formed from polymer optical fibres (POF).

3. Telecommunications transmission method according to claim 2, **characterised in that** the polymer optical fibres (POF) are formed as a step index POF (SI-POF).

4. Telecommunications transmission method according to any of the preceding claims, **characterised in that** location A has an optical line terminal (OLT) and location B is an optical network unit (ONU), and **in that** the transmission link between the two locations is formed from polymer optical fibres.

5. Telecommunications transmission method according to any of claims 1 to 3, **characterised in that** location A has an optical network unit (ONU) and location B is an optical network terminal (ONT), and **in that** the transmission link between the two locations is formed from polymer optical fibres.

6. Telecommunications transmission method according to any of claims 1 to 3, **characterised in that** location A has an optical network terminal (ONT) and location B is a terminal within a local network, and **in that** the transmission link between the two locations is formed from polymer optical fibres.

7. Telecommunications transceiver (MC, OMTM-TC) for transmitting bidirectional data streams for a subscriber by means of multi-carrier modulation between locations A and B, which comprises:
- a data interface (DI)
- a digital signal processing device (DSV) which is connected to the data interface (DI),
- a storage device (MEM) which is connected to the digital signal processing device (DSV) and contains distribution data of the carrier frequencies *f*_{[*BA*]1}1 to *f*_{[*BA*]*xNx*} and *f*_{[*BA*]*mMm*}
- a transmitter amplifier (TxA) in the transmission direction,
- a receiver amplifier (RxA) in the receiving direction, and
- an analogue signal processor (ASV) which is connected to the digital signal processor (DSV), the input of the transmitter amplifier (TxA) and the output of the receiver amplifier (RxA),
**characterised by**
an electro-optic converter (EOC) in the transmission direction, which is connected to the output of the transmitter amplifier (TxA) on the input side and to an optical transmission medium (OF) on the output side, and
an electro-optic converter (EOC) in the receiving direction, which is connected to the optical transmission medium (OF) on the input side and to the receiver amplifier (RxA) on the output side,
the telecommunications transceiver (MC, OMTM-TC) being suitable for converting data signals from the data interface (DI) by means of the telecommunications transmission method according to any of the preceding claims into multi-carrier modulated signals for transmission via the optical transmission medium (OF).

8. Telecommunications transceiver (MC, OMTM-TC) according to claim 7, **characterised in that** the receiver amplifier (RxA) is suitable, depending on the properties of the optical transmission medium (OF), for being automatically adjusted with respect to an optimum transmission connection.

9. Telecommunications transceiver (MC, OMTM-TC) according to either claim 7 or claim 8, **characterised in that** a predistorter (TxB) is also connected between the analogue signal processor (ASV) and the transmitter amplifier (TxA) in the transmission direction, and **in that** an equaliser (RxB) is connected between the receiver amplifier (RxA) and the analogue signal processor (ASV) in the receiving direction.

10. Telecommunications transceiver (MC, OMTM-TC) according to any of claims 7 to 9, **characterised in that** the electro-optic converter (EOC) is connected to a first optical transmission medium (OF), and **in that** the opto-electric converter (OEC) is connected to a second optical transmission medium (OF) (optical duplex mode).

11. Telecommunications transceiver (MC, OMTM-TC) according to any of claims 7 to 9, **characterised in that** the electro-optic converter (EOC) and the opto-electric converter (OEC) are connected to an optical transmission medium (OF) on the output and the input side via an optical directional coupler (OC) (optical simplex mode).

12. Telecommunications transceiver (MC, OMTM-TC) according to any of claims 7 to 11, **characterised in that** the electro-optic converter (EOC) is formed as an LED or laser diode with or without a distorter.

13. Telecommunications transceiver (MC, OMTM-TC) according to any of claims 7 to 12, **characterised in that** the opto-electric converter (OEC) is formed as a PIN diode or an avalanche photodiode (APD) with or without an equaliser.

14. Telecommunications transceiver (MC, OMTM-TC) according to any of claims 7 to 13, **characterised in that** it is formed as a media converter (MC) which converts the data transmission from an electrical multi-carrier modulation transmission to an optical multi-carrier modulation transmission (OMTM), or vice versa, by utilising the occupied transmission channel.

15. Telecommunications transceiver (MC, OMTM-TC) according to any of claims 7 to 14, **characterised in that**, in the case of a telecommunications subscriber (CPE), it is formed as at least one interface device in a distributer device, it being possible via said at least one interface device to connect a plurality of terminals (UD) via optical transmission media.

16. Telecommunications transceiver (MC, OMTM-TC) according to any of claims 7 to 15, **characterised in that** the optical transmission medium is formed from polymer optical fibres (POF).

17. Telecommunications transceiver (MC, OMTM-TC) according to any of claims 7 to 16, **characterised in that** the polymer optical fibres (POF) are formed as a step index POF (SI-POF).

## Revendications

1. Procédé de transmission de télécommunication destiné à la transmission de flux de données bidirectionnels au moyen d'une modulation sur plusieurs porteuses entre des emplacements A et B sur un trajet de transmission, qui comporte une partie optique et en partie une partie électrique, les canaux de transmission (T1_{n,} T2ₙ, ... , TNₙ ; T1ₘ, T2ₘ, ... , TMₘ) étant attribués à des fréquences de porteuse de sorte que l'on emploie en direction de A vers B n groupes de fréquences de porteuse [AB]₁ à [AB]ₙ qui comportent chacun des fréquences de porteuse f[AB]ₙ1 à f[AB]ₙNₙ, et en direction de B vers A m groupes de fréquences de porteuse [BA]₁ à [BA]ₘ, qui comportent chacun des fréquences de porteuse f[BA]ₘ1 à f[BA]ₘMₘ, n étant l'indice du n^{ème} groupe de fréquences de porteuse et N le nombre maximal de canaux de transmission par n^{ème} groupe de fréquences de porteuse en direction de A vers B et m étant l'indice du m^{ème} groupe de fréquences de porteuse et M le nombre maximal de canaux de transmission par m^{ème} groupe de fréquences de porteuse en direction de B vers A, les groupes de fréquences de porteuse des différentes directions étant séparés les uns des autres par des intervalles de fréquences limités f [AB] ₓNₓ et f[BA]ₓ1 avec x ≤ m ainsi que x ≤ n, et par f[BA]_{y}M_{y} et f[AB]_{y+1}1 avec y < m ainsi que y < n,
**caractérisé en ce que**
la transmission des flux de données a lieu par le biais du support de transmission optique de la manière suivants :
les canaux de transmission avec les fréquences de porteuse de f[AB]₁1 à f [AB] ₙNₙ, pour m < n ou à f [BA]ₘMₘ, pour m = n comprennent les fréquences de porteuse dans les intervalles de fréquences limités de la modulation de plusieurs porteuses f[AB]ₓNₓ et f[BA]ₓ1, avec x ≤ m ainsi que x ≤ n, et de f[BA]_{y}M_{y} et f[AB]_{y}+₁1, avec y < m ainsi que y < n, à chaque fois en direction de A vers B et en direction de B vers A.

2. Procédé de transmission de télécommunication selon la revendication 1, **caractérisé en ce que** le support de transmission optique est formé de fibres optiques polymères (POF).

3. Procédé de transmission de télécommunication selon la revendication 2, **caractérisé en ce que** les fibres optiques polymères (POF) sont formées POF à saut d'indice (SI-POF).

4. Procédé de transmission de télécommunication selon l'une quelconque des revendications précédentes, **caractérisé en ce que** l'emplacement A comporte un terminal de ligne optique (OLT) et l'emplacement B est une unité de réseau optique (ONU), et **en ce que** le trajet de transmission entre les deux emplacements est formé par des fibres optiques polymères.

5. Procédé de transmission de télécommunication selon l'une quelconque des revendications 1 à 3, **caractérisé en ce que** l'emplacement A comporte une unité de réseau optique (ONU) et l'emplacement B est un terminal de réseau optique (ONT) et **en ce que** le trajet de transmission entre les deux emplacements est formé en fibres optiques polymères.

6. Procédé de transmission de télécommunication selon l'une quelconque des revendications 1 à 3, **caractérisé en ce que** l'emplacement A comporte un terminal de réseau optique (ONT) et l'emplacement B est un appareil terminal à l'intérieur d'un réseau résidentiel, et **en ce que** le trajet de transmission entre les deux emplacements est formé de fibres optiques polymères.

7. Dispositif d'émission et de réception de télécommunication (MC, OMTM-TC) destiné à la transmission de flux de données bidirectionnels pour un abonné au moyen d'une modulation de plusieurs porteuses entre des emplacements A et B, qui comporte :
- une interface de données (Dl)
- un dispositif de traitement de signal numérique (DSV), qui est relié à l'interface de données (DI),
- un dispositif de mémoire (MEM), qui est relié au dispositif de traitement de signal numérique (DSV) et contient des données de répartition des fréquences de porteuse f[AB]₁1 à f [AB] ₙNₙ et f [BA] ₘMₘ,
- un amplificateur d'émission (TxA) dans la direction d'émission,
- un amplificateur de réception (RxA) dans la direction de réception, et
- un dispositif de traitement de signal analogique (ASV), qui est relié avec le dispositif de traitement de signal numérique (DSV), à l'entrée de l'amplificateur d'émission (TxA) et à la sortie de l'amplificateur de réception (RxA),
**caractérisé par**
un convertisseur électro-optique (EOC) dans la direction d'émission, qui est relié du côté entrée avec la sortie de l'amplificateur d'émission (TxA) et du côté sortie avec un support de transmission optique (OF), et
un convertisseur opto-électrique (OEC) dans la direction de réception, qui est relié côté entrée avec le support de transmission optique (OF) et côté sortie avec l'amplificateur de réception (RxA),
le dispositif d'émission et de réception de télécommunication (MC, OMTM-TC) étant apte à convertir des signaux de données provenant de l'interface de données (DI) au moyen du procédé de transmission de télécommunication selon l'une quelconque des revendications précédentes en des signaux modulés sur plusieurs porteuses en vue de la transmission par le support de transmission optique (OF).

8. Dispositif d'émission et de réception de télécommunication (MC, OMTM-TC) selon la revendication 7, **caractérisé en ce que** l'amplificateur de réception (RxA) est apte à être réglé automatiquement selon des propriétés du support de transmission optique (OF) en ce qui concerne une liaison de transmission optique optimale.

9. Dispositif d'émission et de réception de télécommunication (MC, OMTM-TC) selon la revendication 7 ou 8, **caractérisé en ce que**, en outre, un dispositif de précorrection (TxB) est monté dans la direction d'émission entre le dispositif de traitement de signal analogique (ASV) et l'amplificateur d'émission (TxA) et **en ce qu'**un dispositif de correction (RxB) est monté en direction de réception entre l'amplificateur de réception (RxA) et le dispositif de traitement de signal analogique (ASV).

10. Dispositif d'émission et de réception de télécommunication (MC, OMTM-TC) selon l'une quelconque des revendications 7 à 9, **caractérisé en ce que** le convertisseur électro-optique (EOC) est relié avec un premier support de transmission optique (OF) et **en ce que** le convertisseur opto-électrique (OEC) est relié avec un deuxième support de transmission optique (OF) (mode duplex optique).

11. Dispositif d'émission et de réception de télécommunication (MC, OMTM-TC) selon l'une quelconque des revendications 7 à 9, **caractérisé en ce que** le convertisseur électro-optique (EOC) et le convertisseur opto-électrique (OEC) sont reliés côté sortie respectivement côté entrée par un coupleur directionnel optique (OC) avec un support de transmission optique (OF) (mode simplex optique).

12. Dispositif d'émission et de réception de télécommunication (MC, OMTM-TC) selon l'une quelconque des revendications 7 à 11, **caractérisé en ce que** le convertisseur électro-optique (EOC) est conçu sous forme de DEL ou de diode laser avec ou sans générateur de distorsion.

13. Dispositif d'émission et de réception de télécommunication (MC, OMTM-TC) selon l'une quelconque des revendications 7 à 12, **caractérisé en ce que** le convertisseur opto-électrique (OEC) est conçu sous forme d'une diode Pin ou d'une photodiode à avalanche (APD) avec ou sans dispositif de correction.

14. Dispositif d'émission et de réception de télécommunication (MC, OMTM-TC) selon l'une quelconque des revendications 7 à 13, **caractérisé en ce qu'**il est conçu sous forme de convertisseur de support (MC) qui convertit la transmission de données d'une transmission électrique à modulation sur plusieurs porteuses en une transmission optique de modulation sur plusieurs porteuses (OMTM) ou inversement en utilisant à chaque fois les canaux de transmission occupés.

15. Dispositif d'émission et de réception de télécommunication (MC, OMTM-TC) selon l'une quelconque des revendications 7 à 14, **caractérisé en ce que**, chez un abonné de télécommunication (CPE), il est conçu sous forme au moins d'un dispositif d'interface dans un dispositif de distribution, par le biais duquel une pluralité d'appareils terminaux (UD) peuvent être reliés à au moins un dispositif d'interface par des supports de transmission optiques.

16. Dispositif d'émission et de réception de télécommunication (MC, OMTM-TC) selon l'une quelconque des revendications 7 à 15, **caractérisé en ce que** le support de transmission optique est conçu en fibres optiques polymères (POF).

17. Dispositif d'émission et de réception de télécommunication (MC, OMTM-TC) selon l'une quelconque des revendications 7 à 16, **caractérisé en ce que** les fibres optiques polymères (POF) sont conçues sous forme de POF à saut d'indice (SI-POF).
